(19) Europäisches Patentamt / European Patent Office / Office européen des brevets

(11) **EP 3 203 738 A1**

(12) **EUROPEAN PATENT APPLICATION**
published in accordance with Art. 153(4) EPC

(43) Date of publication:
**09.08.2017 Bulletin 2017/32**

(21) Application number: **15854103.7**

(22) Date of filing: **24.09.2015**

(51) Int Cl.:
*H04N 19/117* (2014.01)    *H04N 19/176* (2014.01)
*H04N 19/174* (2014.01)

(86) International application number:
**PCT/KR2015/010062**

(87) International publication number:
**WO 2016/068493 (06.05.2016 Gazette 2016/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **31.10.2014 US 201462073327 P**

(71) Applicant: Samsung Electronics Co., Ltd.
**Gyeonggi-do 16677 (KR)**

(72) Inventors:
• **CHOI, Ki-ho**
  **Seoul 04586 (KR)**
• **ALSHIN, Alexander**
  **Suwon-si**
  **Gyeonggi-do 16711 (KR)**
• **ALSHINA, Elena**
  **Suwon-si**
  **Gyeonggi-do 16711 (KR)**

(74) Representative: **Appleyard Lees IP LLP**
**15 Clare Road**
**Halifax HX1 2HY (GB)**

(54) **VIDEO ENCODING METHOD APPLYING MULTI-OFFSET SCHEME AND APPARATUS THEREFOR, AND VIDEO DECODING METHOD AND APPARATUS THEREFOR**

(57) A video decoding method comprises when a first offset method is applied to a current slice comprising a current block, adjusting an offset with respect to the current block, based on a first offset parameter of the current block; when the first offset method is applied to the current slice, determining whether to apply a second offset method to the current slice; when the second offset method is applied to the current slice, determining a second offset parameter of the current block; and applying an offset based on the second offset parameter to the current block to which the offset based on the first offset parameter is applied, wherein the first offset parameter and the second offset parameter comprise offset values for the current block.

## FIG. 2A

**Description**

TECHNICAL FIELD

The present disclosure relates to video encoding methods and apparatuses and video decoding methods and apparatuses that apply a multi-offset method.

BACKGROUND ART

As hardware for reproducing and storing high resolution or high quality video content is being developed and supplied, a need for a video codec for effectively encoding or decoding the high resolution or high quality video content is increasing. In a conventional video codec, a video is encoded according to a limited encoding method based on a coding unit having a predetermined size.

Image data of the space domain is transformed into coefficients of the frequency domain via frequency transformation. In the video codec, an image is split into blocks having a predetermined size, discrete cosine transformation (DCT) is performed on each block, and frequency coefficients are encoded in block units, for rapid calculation of frequency transformation. Compared with image data of the space domain, coefficients of the frequency domain are easily compressed. In particular, since an image pixel value of the space domain is expressed according to a prediction error via inter prediction or intra prediction by a video codec, when frequency transformation is performed on the prediction error, a large amount of data may be transformed to 0. By using the video codec, an amount of data may be reduced by replacing data that is consecutively and repeatedly generated with small-sized data.

In particular, a method of applying a reconstruction pixel value corresponding to an adaptively determined offset to a sample may be applied in order to minimize an error between an original image and a reconstruction image in connection with video encoding and decoding operations.

DETAILED DESCRIPTION OF THE INVENTION

TECHNICAL PROBLEM

Video encoding methods and apparatuses and video decoding methods and apparatuses that apply a multi-offset method in order to improve a quality of a reconstruction image are disclosed. A ringing artifact in various directions that occurs in a reconstruction image may be removed by using a multi-offset method, and an error of the reconstruction image that may be increased when a single-offset method is applied may be reduced.

Obviously, the technical problems of the present disclosure are not limited thereto, and other technical problems will become apparent to one of ordinary skill in the art from the following description.

A video decoding method comprises, when a first offset method is applied to a current slice comprising a current block, adjusting an offset with respect to the current block, based on a first offset parameter of the current block; when the first offset method is applied to the current slice, determining whether to apply a second offset method to the current slice; when the second offset method is applied to the current slice, determining a second offset parameter of the current block; and applying an offset based on the second offset parameter to the current block to which the offset based on the first offset parameter is applied, wherein the first offset parameter and the second offset parameter comprise offset values for the current block.

DESCRIPTION OF THE DRAWINGS

FIGS. 1A and 1B are a block diagram of a video encoding apparatus and a flowchart of a video encoding method that applies a multi-offset method, according to embodiments of the present disclosure, respectively.

FIGS. 2A and 2B are a block diagram of a video decoding apparatus and a flowchart of a video decoding method that applies a multi-offset method, according to embodiments of the present disclosure, respectively.

FIG. 3 is a block diagram of a video decoding apparatus according to another embodiment of the present disclosure.

FIGS. 4A through 4C are diagrams for explaining an edge type sample adaptive offset (SAO) technique, according to embodiments of the present disclosure.

FIG. 5 is a diagram for explaining a band type SAO technique, according to an embodiment of the present disclosure.

FIGS. 6A and 6B are diagrams for explaining a method of applying a multi-offset method, according to embodiments of the present disclosure.

FIG. 7 is a table showing syntax elements of a plurality of pieces of use information of a multi-offset method with respect to slices, according to various embodiments of the present disclosure.

FIGS. 8A through 8C are tables showing syntax elements with respect to a current block, according to various embodiments of the present disclosure.

FIG. 9 is a table showing syntax elements of a plurality of pieces of information indicating an offset type of a current block, according to an embodiment of the present disclosure.

FIGS. 10A and 10B are tables showing syntax elements of a plurality of pieces of information indicating an offset class of a multi-offset method with respect to a current block, according to various embodiments of the present disclosure.

FIG. 11 is a table for explaining a method of applying a multi-offset method using a merge mode, according to an embodiment of the present disclosure.

FIG. 12 is a block diagram of a video encoding apparatus based on coding units having a tree structure, according to an embodiment of the present disclosure.

FIG. 13 is a block diagram of the video decoding apparatus based on coding units according to a tree structure, according to an embodiment of the present disclosure.

FIG. 14 is a diagram for describing a concept of coding units according to an embodiment of the present disclosure.

FIG. 15 is a block diagram of an image encoder based on coding units, according to an embodiment of the present disclosure.

FIG. 16 is a block diagram of an image decoder based on coding units, according to an embodiment of the present disclosure.

FIG. 17 is a diagram illustrating coding units according to depths and partitions, according to an embodiment of the present disclosure.

FIG. 18 is a diagram for describing a relationship between a coding unit and transformation units, according to an embodiment of the present disclosure.

FIG. 19 illustrates a plurality of pieces of encoding information according to an embodiment of the present disclosure.

FIG. 20 is a diagram of deeper coding units according to depths, according to an embodiment of the present disclosure.

FIGS. 21, 22, and 23 are diagrams for describing a relationship between coding units, prediction units, and transformation units, according to an embodiment of the present disclosure.

FIG. 24 is a diagram for describing a relationship between a coding unit, a prediction unit, and a transformation unit according to encoding mode information of Table 1.

FIG. 25 is a diagram of a physical structure of a disc in which a program is stored, according to an embodiment.

FIG. 26 is a diagram of a disc drive for recording and reading a program by using the disc.

FIG. 27 is a diagram of an overall structure of a content supply system for providing a content distribution service.

FIGS. 28 and 28 illustrate external and internal structures of a mobile phone to which the video encoding method and the video decoding method of the present disclosure are applied, according to embodiments.

FIG. 30 illustrates a digital broadcasting system employing a communication system, according to an embodiment.

FIG. 31 is a diagram illustrating a network structure of a cloud computing system using the video encoding apparatus and the video decoding apparatus, according to an embodiment.

BEST MODE

According to an aspect of the present disclosure, a video decoding method comprises when a first offset method is applied to a current slice comprising a current block, adjusting an offset with respect to the current block, based on a first offset parameter of the current block; when the first offset method is applied to the current slice, determining whether to apply a second offset method to the current slice; when the second offset method is applied to the current slice, determining a second offset parameter of the current block; and applying an offset based on the second offset parameter to the current block to which the offset based on the first offset parameter is applied, wherein the first offset parameter and the second offset parameter comprise offset values for the current block.

The determining of whether to apply the second offset method to the current slice comprises: determining whether to apply the second offset method to the current slice based on a second offset use information about the current slice obtained from a bitstream.

The determining of whether to adjust the second offset method to the current slice comprises: determining whether to apply the second offset method to the current slice in the same manner as whether to apply the first offset method to the current slice.

The first offset parameter and the second offset parameter of the current block comprise at least one of offset use information about the current block, an offset type, an offset class, and offset values.

The determining of the second offset parameter of the current block comprises: determining the second offset parameter of the current block based on the first offset parameter of the current block.

The video decoding method further comprises: determining whether to apply the first offset method to the current block by obtaining first offset use information about the current block from a bitstream.

The determining of the second offset parameter of the current block comprises: when the first offset use information about the current block indicates that the first offset method is applied to the current block, obtaining second offset use information about the current block from a bitstream.

An offset type of the second offset method of the current block is differently determined from an offset type of the first offset method of the current block.

The first offset parameter and the second offset parameter of the current block comprise information simultaneously indicating an offset type and an offset class of the current block.

The video decoding method further comprises: obtaining first offset merge information and second offset merge information respectively indicating whether to use first offset parameters and second offset parameters of adjacent blocks of the current block to determine the first offset parameter and the second offset parameter of the current block; determining the first offset parameter of the current block based on the first offset parameters of the adjacent blocks according to the first offset merge information; and determining the second offset parameter of the current block based on the second offset parameters of the adjacent blocks according to the second offset merge information.

According to another aspect of the present disclosure, a video encoding method comprises when a first offset method is applied to a current slice comprising a current block, adjusting an offset with respect to the current block based on a first offset parameter of the current block; when the first offset method is applied to the current slice, determining whether to apply a second offset method to the current slice; when the second offset method is applied to the current slice, determining a second offset parameter of the current block; and generating a bitstream comprising first offset use information indicating whether to apply the first offset method to the current slice, second offset use information indicating whether to apply the second offset method to the current slice, and the first offset parameter and the second offset parameter comprising offset values of the current block.

The determining of whether to apply the second offset method to the current slice comprises: determining whether to apply the second offset method to the current slice based on whether to apply the second offset method to blocks included in a previous slice of the current slice.

The determining of whether to adjust the second offset method to the current slice comprises: determining whether to apply the second offset method to the current slice in the same manner as whether to apply the first offset method to the current slice.

The first offset parameter and the second offset parameter of the current block comprise at least one of offset use information about the current block, an offset type, an offset class, and offset values.

The determining of the second offset parameter of the current block comprises: determining the second offset parameter of the current block based on the first offset parameter of the current block.

The determining of the second offset parameter of the current block comprises: when the second offset method is applied to the current slice, determining second offset use information about the current block.

The determining of the second offset parameter of the current block comprises: when the first offset method is applied to the current block, determining second offset use information about the current block.

An offset type of the second offset method of the current block is differently determined from an offset type of the first offset method of the current block.

The first offset parameter and the second offset parameter of the current block comprise information simultaneously indicating an offset type and an offset class of the current block.

According to another aspect of the present disclosure, a video decoding apparatus comprises a first offset method decoder, when a first offset method is applied to a current slice comprising a current block, configured to adjust an offset with respect to the current block based on a first offset parameter of the current block; and a second offset method decoder, when the first offset method is applied to the current slice, configured to determine whether to apply a second offset method to the current slice, when the second offset method is applied to the current slice, determine a second offset parameter of the current block, and adjust an offset based on the second offset parameter with respect to the current block with respect to which the offset based on the first offset parameter is adjusted, wherein the first offset parameter and the second offset parameter comprise offset values of the current block.

According to another aspect of the present disclosure, a video encoding apparatus comprises a first offset method encoder, when a first offset method is applied to a current slice comprising a current block, configured to adjust an offset with respect to the current block based on a first offset parameter of the current block; a second offset method encoder, when the first offset method is applied to the current slice, configured to determine whether to adjust a second offset method to the current slice, and when the second offset method is applied to the current slice, determine a second offset parameter of the current block; and a bitstream generator configured to generate a bitstream comprising first offset use information indicating whether to apply the first offset method to the current slice, second offset use information indicating whether to apply the second offset method to the current slice, and the first offset parameter and the second offset parameter comprising offset values of the current block.

MODE OF THE INVENTION

Hereinafter, a method of manufacturing and using the present disclosure is described in detail. The terms '...unit', 'module', etc. that are described in the present specification mean a unit processing at least one function or operation and may be implemented in hardware or software or may be implemented in a combination of hardware and software.

'An embodiment' or "embodiments' of the principle of the present disclosure does not mean a special feature, structure, characteristic, etc. described with embodiments included in at least one embodiment of the principle of the present disclosure in the present specification. Thus, occurrence of the term 'in an embodiment' or "in embodiments' that occurs in various places throughout the present specification does not necessarily indicate all the same embodiment.

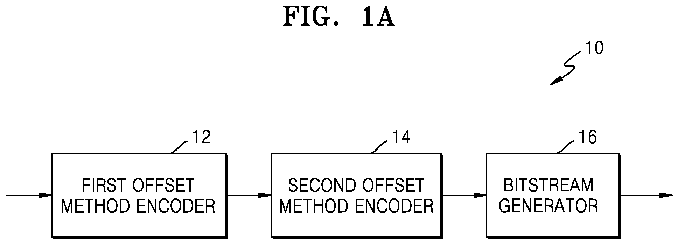

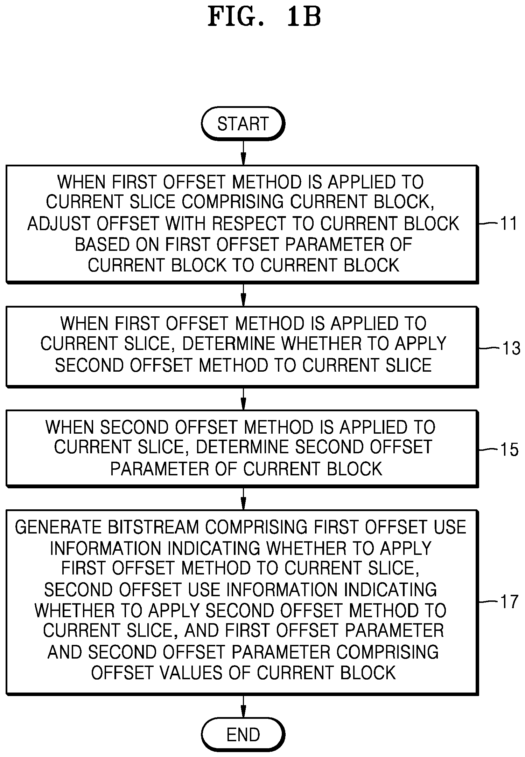

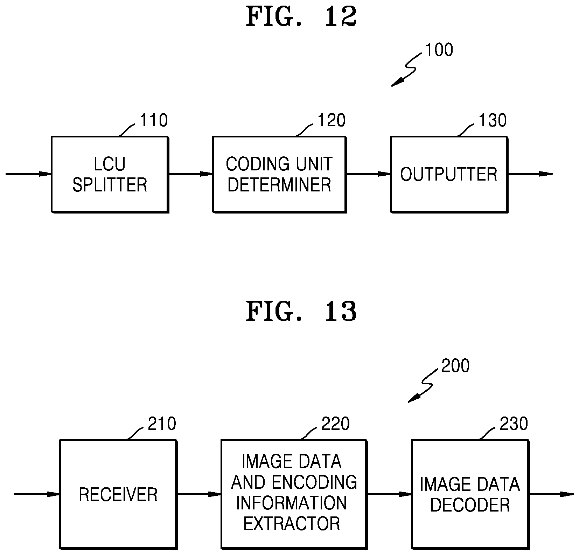

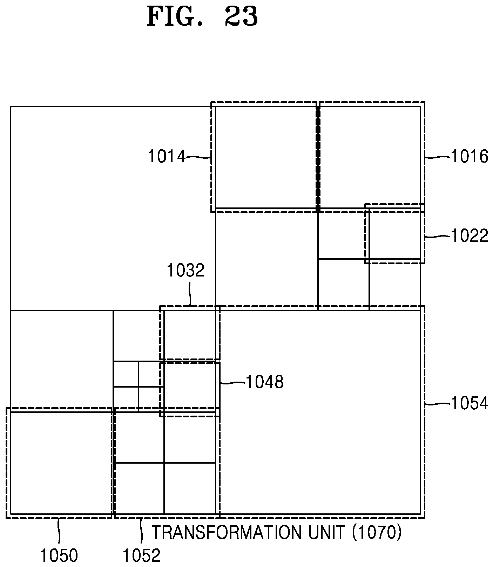

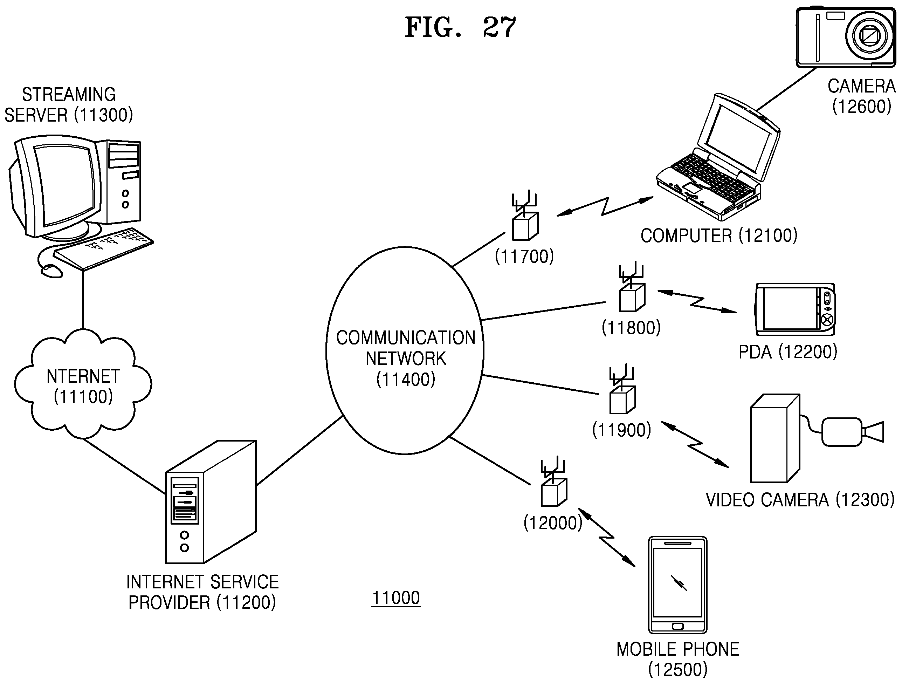

First, a video encoding method and a video encoding method that applies a multi-offset method according to an embodiment are disclosed with reference to FIGS. 1 through 11. Various embodiments of a scalable video encoding method and apparatus that encode a prediction error by adjusting a multi sample adaptive offset (SAO) are provided. Also, embodiments in which a multi-offset method is used according to a pixel classification in a video encoding method and a video decoding method based on coding units having a tree structure according to various embodiments are disclosed with reference to FIGS. 12 through 31.

Hereinafter, an 'image' may denote a still image or a moving image of a video, or a video itself.

Hereinafter, a 'sample' refers to data that is assigned to a sampling location of an image and is to be processed. For example, pixel values or residual of a block in an image of a spatial domain may be samples.

Hereinafter, a "current block" may refer to a block of an image to be encoded or decoded.

First, a video encoding method and a video encoding method that applies a multi-offset method are disclosed with reference to FIGS. 1 through 10.

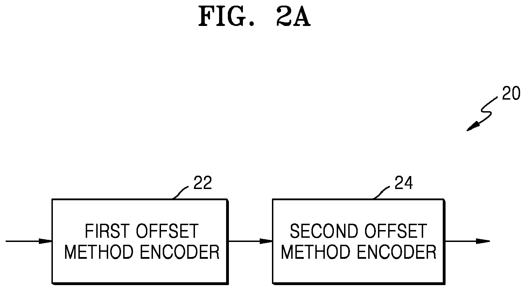

Referring to FIGS. 1A and 2A, samples are signaled between a video encoding apparatus 10 and a video decoding apparatus 20. In other words, the video encoding apparatus 10 may encode video samples and may transmit the video samples as types of a bitstream, and the video decoding apparatus 20 may parse and reconstruct the video samples from the received bitstream.

The video encoding apparatus 10 and the video decoding apparatus 20 according to an embodiment signal offset parameters to minimize errors between original pixels and reconstructed pixels by adjusting reconstructed pixels by offsets determined based on pixel classification. Offset values are encoded, transmitted, and received as offset parameters between the video encoding apparatus 10 and the video decoding apparatus 20, and then are decoded from the offset parameters.

Accordingly, the video decoding apparatus 20 according to an embodiment may generate reconstructed pixels of each image block by decoding the received bitstream, may adjust the reconstructed pixels by offset values reconstructed from the bitstream, and thus may generate a reconstructed image having a minimized error from an original image.

In this regard, the video encoding apparatus 10 and the video decoding apparatus 20 according to an embodiment may signal multi-offset parameters to apply a multi-offset method.

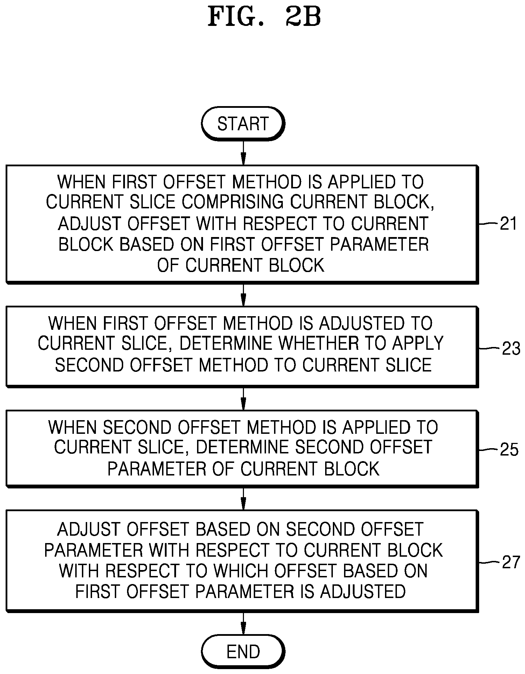

Hereinafter, an operation of the video encoding apparatus 10 that applies the multi-offset method will be described in detail with reference to FIGS. 1A and 1B, and an operation of the video decoding apparatus 20 that applies the multi-offset method will be described in detail with reference to FIGS. 2A and 2B.

FIGS. 1A and 1B are a block diagram of the video encoding apparatus 10 and a flowchart of a video encoding method that applies a multi-offset method, according to embodiments of the present disclosure, respectively.

Referring to FIG. 1A, the video encoding apparatus 10 according to an embodiment may include a first offset method encoder 12, a second offset method encoder 14, and a bitstream generator 16.

The video encoding apparatus 10 according to an embodiment receives an input of images of a video, for example, slices, splits each image into blocks, and encodes each block. A type of a block may be a square or a rectangle, or may be an arbitrary geometrical shape. The block is not limited to a data unit having a uniform size. The block according to an embodiment may be a largest coding unit (LCU) or a coding unit (CU) among coding units having a tree structure. Video encoding and decoding methods based on coding units having a tree structure will be described below with reference to FIGS. 12 through 31.

The video encoding apparatus 10 according to an embodiment may split each input image into blocks such as LCUs, and may output resultant data generated by performing prediction, transformation, and entropy encoding on samples of each block, as a bitstream. Samples of a block may be pixel value data of pixels included in the block.

The video encoding apparatus 10 according to an embodiment may individually encode blocks of a picture. For example, the video encoding apparatus 10 may encode a current LCU based on coding units split from the current LCU and having a tree structure.

In order to encode the current LCU, the video encoding apparatus 10 according to an embodiment may encode samples by performing intra prediction, inter prediction, transformation, and quantization on each of coding units included in the current LCU and having a tree structure.

Next, the video encoding apparatus 10 according to an embodiment may reconstruct the encoded samples included in the current LCU by performing inverse quantization, inverse transformation, and inter prediction or motion compensation on each of the coding units having a tree structure so as to decode the coding units.

Also, the video encoding apparatus 10 according to an embodiment may perform deblocking so as to reduce deterioration of image quality in a block boundary with respect to a sample of the reconstructed current block and may adjust an offset in order to minimize errors between original pixels and reconstructed pixels with respect to the current block on which deblocking is performed.

In this regard, the video encoding apparatus 10 according to an embodiment may apply the multi-offset method so as to minimize errors in various directions of original pixels and reconstructed pixels and errors in various types and prevent occurrence of errors caused by adjusting offsets. The multi-offset method may refer to adjusting offsets to samples of the current block several times by using different offset parameters.

For example, the video encoding apparatus 10 according to an embodiment may adjust offsets two times by sequentially adjusting offsets to the current block based on a first offset method and a second offset method. Thus, when errors are present in two directions in the current block, the video encoding apparatus 10 according to an embodiment may minimize all the errors and may resolve, based on the second offset method, an error that may occur caused by adjusting an offset based on the first offset method.

Also, the video encoding apparatus 10, but not limited thereto, may apply a multi-offset method that uses three or more offset methods.

An offset parameter may include offset use information about the current block, an offset type of the current block, an offset class, and offset values. For example, the video encoding apparatus 10 may adjust an offset to the reconstructed current block based on a first offset parameter and may adjust an offset based on a second offset parameter to the current block to which the offset based on the first offset parameter is adjusted.

Specifically, the first offset method encoder 12 according to an embodiment may determine whether to apply the first offset method to a current image including the reconstructed current block, and, when the first offset method is applied to the current image, and may determine the first offset parameter. For example, the current image may refer to a current slice of a video.

The first offset method encoder 12 according to an embodiment may determine whether to apply the first offset method to each color component of the current slice. For example, the first offset method encoder 12 may determine whether to apply the first offset method for a luma sample (a Y component) and first and second chroma samples (Cr and Cb components) with respect to a YCrCb color image.

The first offset method encoder 12 according to an embodiment may determine whether to apply the first offset method to the current slice with reference to whether to apply the first offset method to a previously encoded slice of the current slice. For example, when a ratio of a block to which the first offset method is applied among blocks included in a previous slice is greater than a predetermined value, the first offset method encoder 12 may determine the first offset method to be applied to the current slice.

The first offset method encoder 12 may determine first offset use information indicating whether to apply the first offset method to the current slice. The first offset use information may be included in a slice header.

If it is determined that the first offset method is applied to the current slice, the first offset method encoder 12 according to an embodiment may determine whether to apply the first offset method to a current block among the blocks of the current slice. If the first offset method is applied to the current block, the first offset method encoder 12 may determine the first offset parameter with respect to the current block. The first offset parameter may include first offset use information about the current block, a first offset type of the current block, a first offset class, and first offset values.

Meanwhile, if it is determined that the first offset method is not applied to the current slice, the first offset method encoder 12 according to an embodiment may not determine the first offset parameter with respect to the current block.

The first offset method encoder 12 according to an embodiment may determine the first offset parameter for each color component of the current block. For example, the first offset method encoder 12 may determine the first offset parameter for the luma sample (the Y component) and first and second chroma samples (the Cr and Cb components) with respect to the YCrCb color image.

The first offset use information about the current block may be information indicating whether to apply the first offset method to the current block. That is, if it is determined that the first offset method is applied to the current slice, whether to apply the first offset method to blocks included in the current slice may be individually determined.

A first offset type of the current block may include an edge offset (EO), a band offset (BO), etc. According to a classification method of pixel values of the current block, it may be determined whether it is suitable to class pixels of the current block according to the EO or the BO.

With respect to the EO, the offset class according to an embodiment may indicate a direction of edges formed between the reconstructed pixels and their adjacent pixels. The offset class of an edge class according to an embodiment may indicate an edge direction of 0°, 90°, 45°, or 135°. Also, with respect to the BO, instead of class information of the EO, information indicating a band that is a section to which pixel values of the reconstructed pixels belong may be encoded.

When the first offset type according to an embodiment is the EO, offset values between the reconstructed pixels and the original pixels may be determined according to directions and shapes of edges formed between the reconstructed pixels and their adjacent pixels.

Also, when the first offset type according to an embodiment is the BO, among a plurality of bands obtained by dividing a total range of pixel values of the reconstructed pixels of the current block, offset values between the reconstructed pixels and the original pixels that belong to each band may be determined. According to cases, the bands may be obtained by evenly or unevenly dividing the total range of the pixel values.

Accordingly, the first offset method encoder 12 according to an embodiment may determine a first offset type of the current block indicating the EO or BO, based on spatial characteristics of pixel values of the current block.

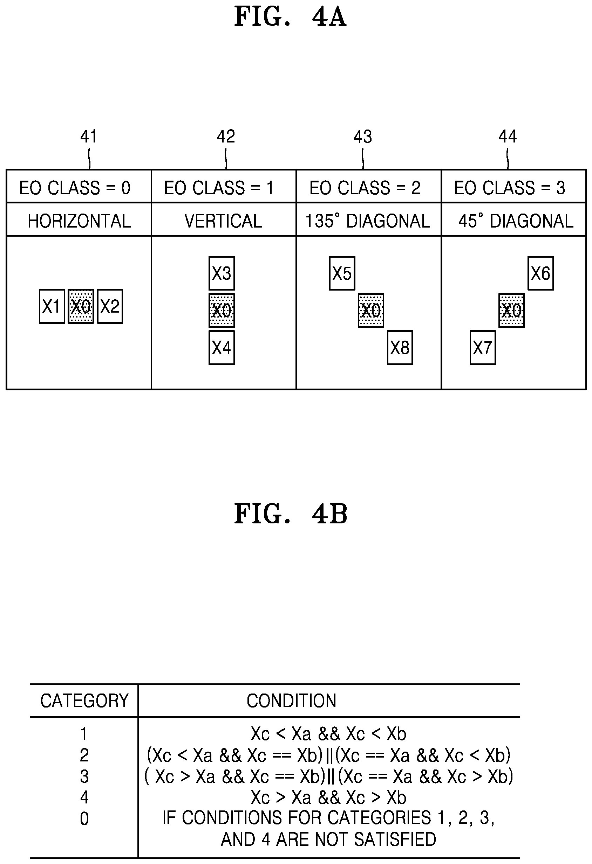

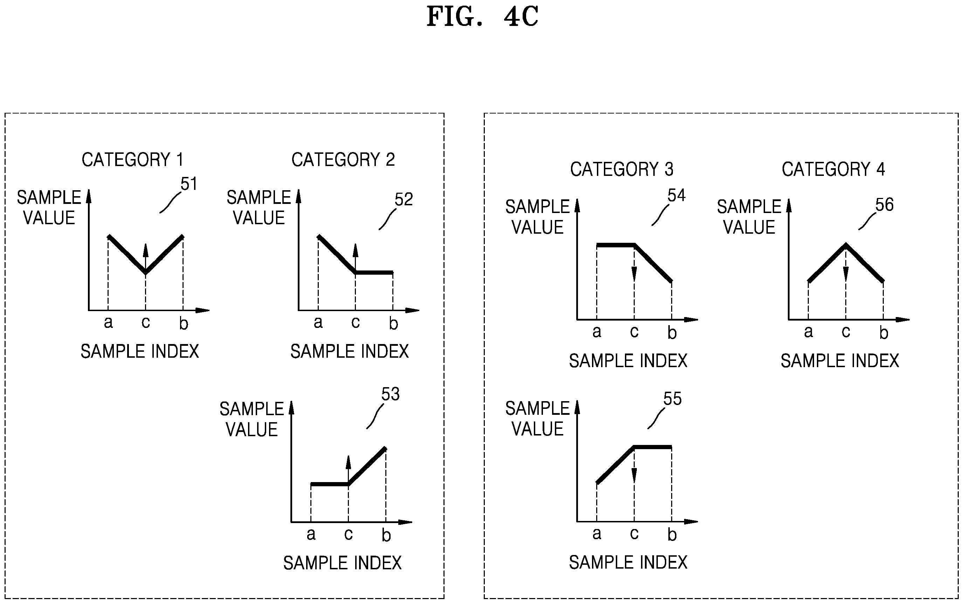

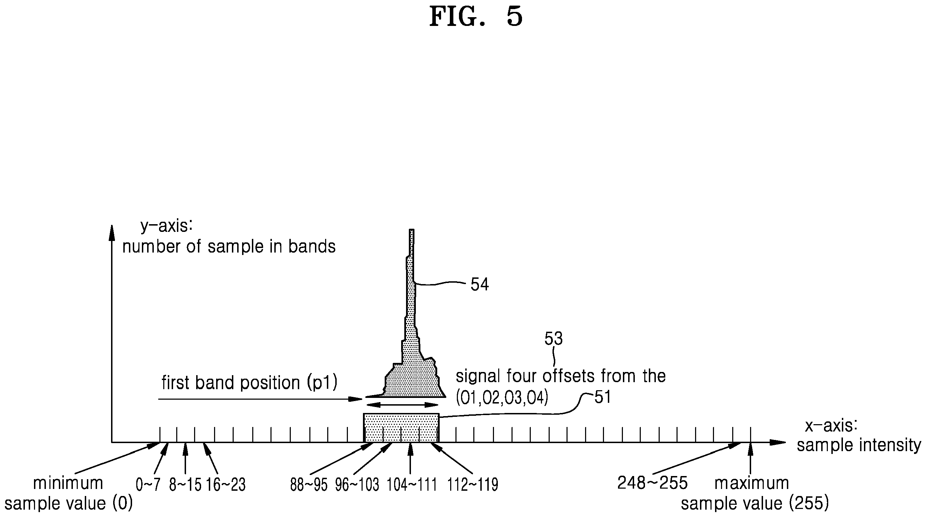

Also, the first offset method encoder 12 according to an embodiment may determine a first offset class of each of the reconstructed pixels according to the first offset type of the current block. Hereinbelow, a more detailed description of the offset parameter will be provided later with reference to FIGS. 4 and 5.

The first offset method encoder 12 according to an embodiment may determine the first offset parameter that is most suitable in consideration of encoding efficiency and rate-distortion (RD) cost.

Also, when it is determined that the first offset method is applied to the current block, the first offset method encoder 12 according to an embodiment may adjust an offset based on the first offset parameter determined with respect to the reconstructed current block.

Meanwhile, the first offset method encoder 12 according to an embodiment may determine whether to use first offset parameters of surrounding blocks to determine the first offset parameter of the current block based on identity between the first offset parameter of the determined current block and the first offset parameters of the surrounding blocks. Whether to use the first offset parameters of the surrounding blocks may be represented by first offset merge information.

The surrounding blocks according to an embodiment may be left blocks or upper blocks that are adjacent to the current block.

The second offset method encoder 14 according to an embodiment may determine the second offset method to the current slice to which the offset based on the first offset parameter is adjusted and may determine the second offset parameter when the second offset method is applied to the current slice.

The second offset method encoder 14 according to an embodiment may determine whether to apply the second offset method to each color component of the current slice. For example, the second offset method encoder 14 may determine the second offset parameter for the luma sample (the Y component) and the first and second chroma samples (the Cr and Cb components) with respect to the YCrCb color image.

Specifically, when the first offset method is not applied to the current slice, the second offset method encoder 14 according to an embodiment may determine the second offset method not to be applied to the current slice.

Also, when the first offset method is applied to the current slice, the second offset method encoder 14 according to an embodiment may determine whether to apply the second offset method to the current slice with reference to whether to apply the second offset method to a previously encoded slice of the current slice. For example, when a ratio of a block to which the second offset method is applied among blocks included in a previous slice is greater than a predetermined value, the second offset method encoder 14 may determine the second offset method not to be applied to the current slice.

Alternatively, when the first offset method is applied to the current slice, the second offset method encoder 14 may determine the second offset method to be applied to the current slice.

Alternatively, the second offset method encoder 14 according to an embodiment may determine whether to apply the second offset method to the blocks included in the current slice and then determine whether to apply the second offset method to the current slice based on whether to apply the second offset method to the blocks included in the current slice. For example, the second offset method encoder 14 according to an embodiment may determine whether it is suitable to apply the second offset method to the current slice based on the second offset parameter of each of the blocks included in the current slice in consideration of encoding efficiency and rate-distortion (RD) cost, thereby determining whether to apply the second offset method to the current slice.

The second offset method encoder 14 according to an embodiment may determine second offset use information about the current slice indicating whether to apply the second offset method to the current slice. The second offset use information may be included in a slice header.

If it is determined that the second offset method is applied to the current slice, the second offset method encoder 14 according to an embodiment may determine the second offset parameter of the current block for applying the second offset method. The second offset parameter may include at least one of second offset use information about the current block, a second offset type of the current block, a second offset class, and second offset values. If it is determined that the second offset method is not applied to the current slice, the second offset method encoder 14 according to an embodiment may not determine the second offset parameter of the current block.

The second offset method encoder 14 according to an embodiment may determine the second offset parameter for each color component of the current block. For example, the second offset method encoder 14 may determine the second offset parameter for the luma sample (the Y component) and the first and second chroma samples (the Cr and Cb components) with respect to the YCrCb color image.

The second offset method encoder 14 according to an embodiment may determine the second offset parameter of the current block based on the first offset parameter of the current block.

Specifically, the second offset method encoder 14 according to an embodiment may determine the second offset use information about the current block based on the first offset use information about the current block. For example, when the first offset use information indicates that the first offset method is not applied to the current block, the second offset method encoder 14 may not determine the second offset use information and may not apply the second offset method to the current block. When the first offset use information indicates that the first offset method is applied to the current block, the second offset method encoder 14 may determine the second offset use information to be or not to be applied to the current block and may determine the second offset use information.

Also, the second offset method encoder 14 according to an embodiment may determine a second offset type and a second offset class of the current block based on a first offset type and a first offset class of the current block.

For example, the second offset method encoder 14 according to an embodiment may differently determine the second offset type and the first offset type of the current block. When the first offset type of the current block is a band type, the second offset method encoder 14 may determine the second offset type of the current block as an edge type.

Alternatively, the second offset method encoder 14 according to an embodiment may differently determine the second offset class and the first offset class of the current block. When the first offset type of the current block is 0° of an EO, the second offset method encoder 14 may determine the second offset class of the current block as one of 90°, 45°, and 135°.

The second offset method encoder 14 according to an embodiment may determine the second offset type among offset types excluding the previously determined first offset type in consideration of encoding efficiency and RD cost. Also, the second offset method encoder 14 according to an embodiment may determine the second offset class among offset classes excluding the previously determined first offset class in consideration of encoding efficiency and RD cost.

Meanwhile, the second offset method encoder 14 according to an embodiment may determine whether to use second offset parameters of surrounding blocks to determine the second offset parameter of the current block based on an identity of the determined second offset parameter of the current block and the second offset parameters of surrounding blocks. Whether to use the second offset parameters of surrounding blocks may be indicated as second offset merge information.

The surrounding blocks according to an embodiment may be left blocks or upper blocks that are adjacent to the current block.

The bitstream generator 16 according to an embodiment may perform entropy encoding on the first offset use information about a current slice indicating whether to appli the determined first offset method to the current slice.

The first offset use information about the current slice according to an embodiment may be classified into parameters to be encoded by context-based-entropy coding and parameters to be entropy encoded in a bypass mode according to entropy encoding methods.

The context-based entropy coding method may include a series of operations such as binarization for transforming symbols such as the first offset use information about the current slice into a bitstream, and context-based arithmetic encoding on the bitstream. Context adaptive binary arithmetic coding (CABAC) is broadly used an example of the context-based arithmetic encoding method. According to context-based arithmetic encoding and decoding, each bit of a symbol bitstream may be regarded as a bin of context, and each bit position may be mapped to a bin index. A length of the bitstream, i.e., a length of bins, may vary according to sizes of symbol values. For context-based arithmetic encoding and decoding, context-based probability modeling needs to be performed on symbols.

Context-based probability modeling needs to be performed on the assumption that a coding bit of a current symbol is probabilistically predicted based on previously encoded symbols. For context-based probability modeling, context of each bit position of a symbol bitstream, i.e., each bin index, needs to be newly updated. Here, probability modeling refers to a process of analyzing a probability that 0 or 1 is generated in each bin. A process of updating context by reflecting a result of analyzing a probability of each bit of the symbols of a new block to the context may be repeated in every block. If the above-described probability modeling is repeated, a probability model in which each bin is matched to a probability may be determined.

Accordingly, with reference to the context-based probability model, an operation of selecting and outputting a code corresponding to current context may be performed with respect to each bit of a binarized bitstream of current symbols, thereby performing context-based entropy encoding.

An operation of determining a context-based probability model of each bin of symbols for encoding using context-based entropy coding requires large amounts of calculation and time. On the other hand, the entropy encoding in bypass mode includes an entropy encoding operation using a probability model without considering context of symbols.

Also, the bitstream generator 16 according to an embodiment may perform entropy encoding on the second offset use information about the current slice indicating whether to apply the determined second offset method to the current slice in the same way as adjusted to the first offset use information. In this regard, only when the first offset method is applied to the current slice, the bitstream generator 16 may perform entropy encoding on the second offset use information about the current slice.

The bitstream generator 16 according to an embodiment may perform entropy encoding on the determined first offset parameter and second offset parameter of the current block.

The bitstream generator 16 according to an embodiment may perform entropy encoding on the determined first offset merge information and second offset merge information regarding the current block.

The bitstream generator 16 according to an embodiment may generate and transmit bitstream including the information on which entropy encoding is performed to the video decoding apparatus 20 of FIG. 2A.

Referring to FIG. 1 B, in operation 11, the video encoding apparatus 10 according to an embodiment may determine whether to apply the first offset method to the current slice including the current block.

For example, the video encoding apparatus 10 according to an embodiment may determine whether to apply the first offset method to the current slice with reference to whether to apply the first offset method to a previously encoded slice of the current slice. For example, when a ratio of a block to which the first offset method is applied among blocks included in a previous slice is greater than a predetermined value, the video encoding apparatus 10 may determine the first offset method to be applied to the current slice.

If it is determined that the first offset method is not applied to the current slice, the video encoding apparatus 10 may not determine the first offset parameter with respect to the current block.

If it is determined that the first offset method is applied to the current slice, the video encoding apparatus 10 may determine the first offset parameter of the current block and adjust an offset based on the determined first offset method to the current block. Specifically, the video encoding apparatus 10 may determine first offset use information about the current block indicating whether to apply the first offset method to the current block, a first offset type of the current block, a first offset class, and first offset values in consideration of encoding efficiency and RD cost.

Also, when the first offset type is the EO, the video encoding apparatus 10 according to an embodiment may not determine encoding information of the first offset values. Prediction of the first offset values will be described in detail with reference to FIGS. 4A and 4B.

Also, the video encoding apparatus 10 according to an embodiment may determine first offset merge information about the current block based on the determined first offset parameter of the current block.

In operation 13, when the first offset method is applied to the current slice, the video encoding apparatus 10 according to an embodiment may determine whether to apply a second offset method to the current slice.

The video encoding apparatus 10 according to an embodiment may determine whether to apply the second offset method to the current slice based on whether to apply the first offset method to the current slice.

The video encoding apparatus 10 according to an embodiment may determine whether to apply the second offset method to the current slice with reference to whether to apply the second offset method to a previously encoded slice of the current slice. For example, when a ratio of a block to which the second offset method is applied among blocks included in a previous slice is greater than a predetermined value, the video encoding apparatus 10 may determine the second offset method to be applied to the current slice. When the ratio of the block to which the second offset method is applied among blocks included in the previous slice is smaller than the predetermined value, the video encoding apparatus 10 may determine the second offset method not to be applied to the current slice.

Alternatively, when the first offset method is applied to the current slice, the video encoding apparatus 10 according to an embodiment may determine the second offset method to be applied to the current slice.

Also, when it is determined that the first offset method is not applied to the current slice, the video encoding apparatus 10 according to an embodiment may not determine whether to apply the second offset method to the current slice.

In operation 15, when the second offset method is applied to the current slice, the video encoding apparatus 10 according to an embodiment may determine a second offset parameter of the current block. The video encoding apparatus 10 according to an embodiment may determine at least one of second offset use information about the current block indicating whether to apply the second offset method to the current block, a second offset type of the current block, a second offset class, and second offset values.

Specifically, the video encoding apparatus 10 according to an embodiment may determine the second offset parameter of the current block based on the first offset parameter of the current block.

The video encoding apparatus 10 according to an embodiment may determine the second offset use information about the current block based on the first offset use information about the current block. For example, when the first offset use information indicates that the first offset method is not applied to the current block, the video encoding apparatus 10 may not determine the second offset use information and may not apply the second offset method to the current block. When the first offset use information indicates that the first offset method is applied to the current block, the video encoding apparatus 10 may determine the second offset use information to be or not to be adjusted to the current block and may determine the second offset use information.

Also, the video encoding apparatus 10 according to an embodiment may determine a second offset type and a second offset class of the current block based on a first offset type and a first offset class of the current block.

For example, the video encoding apparatus 10 according to an embodiment may differently determine the second offset type and the first offset type of the current block. Alternatively, the video encoding apparatus 10 according to an embodiment may differently determine the second offset class and the first offset class of the current block.

That is, the video encoding apparatus 10 according to an embodiment may determine the second offset type among offset types excluding the previously determined first offset type in consideration of encoding efficiency and RD cost. Also, the video encoding apparatus 10 may determine the second offset class among offset classes excluding the previously determined first offset class.

Also, when the second offset type of the current block is a band type, the video encoding apparatus 10 according to an embodiment may further determine zero value information indicating whether the second offset values are 0 as the second offset value, and, if the second offset values are not 0, may further determine encoding information indicating whether the first offset values are positive numbers or negative numbers as the second offset parameter. The video encoding apparatus 10 according to an embodiment may determine only the zero value information as the second offset value if the second offset values are 0.

Also, when the second offset type of the current block is an edge type, the video encoding apparatus 10 according to an embodiment may not necessarily determine the encoding information of the second offset values.

Also, the video encoding apparatus 10 according to an embodiment may determine the second offset merge information about the current block based on the determined second offset parameter of the current block.

In operation 17, the video encoding apparatus 10 according to an embodiment may generate bitstream including at least one of the first offset use information about the current slice indicating whether to apply the first offset method to the current slice, the second offset use information about the current slice indicating whether to apply the second offset method to the current slice, and the first offset parameter and the second offset parameter of the current block.

The video encoding apparatus 10 according to an embodiment may include a central processor (not shown) for collectively controlling the first offset method encoder 12, the second offset method encoder 14, and the bitstream generator 16. Alternatively, the first offset method encoder 12, the second offset method encoder 14, and the bitstream generator 16 may be driven by their individual processors (not shown) that cooperatively operate to control the video encoding apparatus 10. Alternatively, an external processor (not shown) outside the video encoding apparatus 10 may control the first offset method encoder 12, the second offset method encoder 14, and the bitstream generator 16.

The video encoding apparatus 10 according to an embodiment may include one or more data storages (not shown) for storing input and output data of the first offset method encoder 12, the second offset method encoder 14, and the bitstream generator 16. The video encoding apparatus 10 may include a memory controller (not shown) for managing data input and output to and from the data storages.

In order to perform a video encoding operation including transformation and to output a result of the video encoding operation, the video encoding apparatus 10 may operate in association with an internal or external video encoding processor. The internal video encoding processor of the video encoding apparatus 10 may be an independent processor for performing a video encoding operation. Also, the video encoding apparatus 10, a central processing unit, or a graphic processing unit may include a video encoding processor module to perform a basic video encoding operation.

FIGS. 2A and 2B are a block diagram of a video decoding apparatus 20 and a flowchart of a video decoding method that applies a multi-offset method, according to embodiments of the present disclosure, respectively.

Referring to FIG. 2A, the video decoding apparatus 20 according to an embodiment may include a first offset method decoder 22 and a second offset method decoder 24.

The video decoding apparatus 20 according to an embodiment may receive a bitstream including encoded data of a video. The video decoding apparatus 20 may parse encoded video samples from the received bitstream, and may perform entropy decoding, inverse quantization, inverse transformation, prediction, and motion compensation on each image block so as to generate reconstructed pixels, as a result, a reconstructed image may be generated.

Also, the video decoding apparatus 20 according to an embodiment may receive offset parameters of the multi-offset method for adjusting difference values between original pixels and reconstructed pixels and may minimize an error between an original image and the reconstructed image. The video decoding apparatus 20 may receive encoded data of each LCU of the video, and may reconstruct the LCU based on coding units split from the LCU and having a tree structure.

Specifically, the video decoding apparatus 20 according to an embodiment may parse information indicating whether to apply the multi-offset method to a current slice from a slice header of the received bitstream. For example, the video decoding apparatus 20 may parse at least one of first offset information about the current slice and second offset information about the current slice. The video decoding apparatus 20 according to an embodiment may parse the first offset information about the current slice and the second offset information about the current slice for each color component of the current slice.

Also, the video decoding apparatus 20 according to an embodiment may parse at least one of the first offset parameter and the second offset parameter of the current block from the slice header of the received bitstream according to whether to apply the multi-offset method to the current slice including a current block. The video decoding apparatus 20 according to an embodiment may parse a first offset parameter and second offset information about the current slice for each color component of the current slice.

Also, the video decoding apparatus 20 according to an embodiment may parse first offset merge information and second offset merge information about the current block and, if the first offset merge information indicates that the second offset parameters of the surrounding blocks are available, may not parse the first offset parameter of the current block. The video decoding apparatus 20 according to an embodiment may not parse the second offset parameter of the current block if the second offset merge information indicates that the second offset parameters of surrounding blocks are available.

The video decoding apparatus 20 according to an embodiment may adjust an offset to the reconstructed current block according to the first offset method. The first offset method decoder 22 may previously determine whether to adjust the offset according to the first offset method to the reconstructed current block.

Specifically, the first offset method decoder 22 according to an embodiment may determine whether to apply the first offset method to a current slice including the current block based on the first offset use information about the current slice obtained from the bitstream.

The first offset method decoder 22 according to an embodiment may determine whether to apply the first offset method to each color component of the current slice. For example, the first offset method decoder 22 may obtain the first offset use information about the current slice for a luma sample (a Y component) and first and second chroma samples (Cr and Cb components) with respect to a YCrCb color image and may determine whether to apply the first offset method.

If it is determined that the first offset method is applied to the current slice including the current block, the first offset method decoder 22 according to an embodiment may adjust the offset based on the first offset parameter of the current block obtained from the bitstream to the reconstructed current block. The first offset method decoder 22 according to an embodiment may obtain the first offset parameter of the current block for each color component of the current block and may adjust the offset based on the first offset parameter for each color component.

Also, the first offset method decoder 22 according to an embodiment may determine the first offset parameter of the current block based on the first offset parameters of the surrounding blocks with reference to first merge information about the current block obtained from the bitstream.

The second offset method decoder 24 according to an embodiment may adjust an offset according to the second offset method to the current block to which the offset according to the first offset method is applied. The second offset method decoder 24 may previously determine whether to adjust the offset according to the second offset method to the current block.

Specifically, the second offset method decoder 24 according to an embodiment may determine whether to apply the second offset method to the current slice including the current block based on the first offset use information about the current slice obtained from the bitstream.

For example, when the first offset use information about the current slice indicates that the first offset method is not applied to the current slice, the second offset method decoder 24 according to an embodiment may not parse the second offset use information about the current slice and may not apply the second offset method to the current slice.

Also, when the first offset use information about the current slice indicates that the first offset method is applied to the current slice, the second offset method decoder 24 according to an embodiment may parse the second offset use information about the current slice and may determine whether to apply the second offset method to the current slice.

Alternatively, when the first offset use information about the current slice indicates that the first offset method is applied to the current slice, the second offset method decoder 24 according to an embodiment may not parse the second offset use information about the current slice and may apply the second offset method to the current slice.

The first offset method decoder 22 according to an embodiment may determine whether to apply the first offset method for each color component of the current slice. For example, when the second offset use information about the current slice is parsed, the first offset method decoder 22 may obtain the second offset use information about the current slice for a luma sample (a Y component) and first and second chroma samples (Cr and Cb components) with respect to a YCrCb color image and may determine whether to apply the second offset method.

If it is determined that the second offset method is applied to the current slice including the current block, the second offset method decoder 24 according to an embodiment may obtain the second offset parameter of the current block. The second offset method decoder 24 according to an embodiment may obtain the second offset parameter of the current slice for each color component of the current block and may adjust the offset based on the first offset parameter for each color component.

Specifically, the second offset method decoder 24 according to an embodiment may parse the second offset parameter of the current block from the bitstream. In this regard, the second offset method decoder 24 may parse the second offset parameter based on the first offset parameter of the current block. For example, when the first offset use information about the current block indicates that the first offset method is applied to the current block among the first offset parameters, the second offset method decoder 24 according to an embodiment may parse the second offset use information about the current block. When the first offset use information about the current block indicates that the first offset method is not applied to the current block among the first offset parameters, the second offset method decoder 24 according to an embodiment may not parse the second offset use information about the current block and may not apply the second offset method to the current block.

The second offset method decoder 24 according to an embodiment may parse some of the second offset parameters of the current block from the bitstream and may determine others based on the first offset parameter of the current block.

For example, the second offset method decoder 24 according to an embodiment may not parse a second offset type of the current block from the bitstream and may determine the second offset type with reference to a first offset type. For example, the second offset method decoder 24 according to an embodiment may differently determine the second offset type and the first offset type of the current block. When the first offset type of the current block is a band type, the second offset method decoder 24 may determine the second offset type of the current block as an edge type.

Also, the second offset method decoder 24 according to an embodiment may determine the second offset parameter of the current block based on the second offset parameters of the surrounding blocks with reference to the second merge information about the current block obtained from the bitstream.

If the second offset parameter of the current block is determined, the second offset method decoder 24 according to an embodiment may adjust an offset based on the second offset parameter to the current block to which the offset based on the first offset parameter is adjusted.

The first offset method and the second offset method are sequentially applied to the reconstructed current block, thereby minimizing errors in various directions of original pixels and reconstructed pixels of the current block and errors in various types.

Referring to FIG. 2B, in operation 21, the video decoding apparatus 20 according to an embodiment may determine whether to apply the first offset method to the current slice including the current block.

For example, the video decoding apparatus 20 according to an embodiment may determine whether to apply the first offset method to the current slice based on the first offset use information about the current slice obtained from the bitstream. When the first offset use information about the current slice indicates that the first offset method is applied to the current slice, the video decoding apparatus 20 may obtain the first offset parameter of the current block from the bitstream.

The first offset parameter of the current block according to an embodiment may include first offset use information about the current block, a first offset type of the current block, a first offset class, and first offset values. Also, the first offset parameter of the current block may further include encoding information indicating whether the first offset values are positive numbers or negative numbers, etc.

The video decoding apparatus 20 according to an embodiment may adjust an offset based on the obtained first offset parameter of the current block to the reconstructed current block.

Also, the video decoding apparatus 20 according to an embodiment may determine the first offset parameter of the current block based on the first offset parameters of the surrounding blocks with reference to the first merge information about the current block obtained from the bitstream.

In operation 23, when the first offset method is applied to the current slice, the video decoding apparatus 20 according to an embodiment may determine whether to apply the second offset method to the current slice.

Specifically, when the first offset use information about the current slice indicates that the first offset method is applied to the current slice, the video decoding apparatus 20 according to an embodiment may obtain the second offset use information about the current slice from the bitstream. The video decoding apparatus 20 may determine whether to apply the second offset method to the current slice based on the second offset use information about the current slice.

Also, when the first offset use information about the current slice indicates that the first offset method is not applied to the current slice, the video decoding apparatus 20 according to an embodiment may not obtain the second offset use information about the current slice and may not apply the second offset method to the current slice.

Also, when the first offset use information about the current slice indicates that the first offset method is applied to the current slice, the video decoding apparatus 20 according to an embodiment may apply the second offset method to the current slice based on the first offset use information about the current slice.

In operation 25, when the second offset method is applied to the current slice, the video decoding apparatus 20 according to an embodiment may determine the second offset parameter of the current block.

When the second offset use information about the current slice indicates that the second offset method is applied to the current slice, the video decoding apparatus 20 according to an embodiment may obtain the second offset parameter of the current block from the bitstream.

The video decoding apparatus 20 according to an embodiment may obtain the second offset parameter based on the first offset parameter of the current block.

For example, when the first offset use information about the current slice among the first offset parameters indicates that the first offset method is applied to the current slice, the video decoding apparatus 20 according to an embodiment may obtain the second offset use information about the current block. When the first offset use information about the current slice among the first offset parameters indicates that the first offset method is not applied to the current slice, the video decoding apparatus 20 according to an embodiment may not obtain the second offset use information about the current block and may not apply the second offset method to the current slice.

The second offset parameter of the current block according to an embodiment may include at least one of the second offset use information about the current block, a second offset type of the current block, a second offset class, and second offset values. Also, the second offset parameter of the current block may further include encoding information indicating whether the second offset values are positive numbers or negative numbers.

The video decoding apparatus 20 according to an embodiment may obtain some of the second offset parameters of the current block from the bitstream and may determine others based on the first offset parameter of the current block.

For example, the video decoding apparatus 20 according to an embodiment may not obtain the second offset parameters of the current block from the bitstream and may determine the second offset parameters with reference to the first offset type. For example, the video decoding apparatus 20 according to an embodiment may differently determine the second offset type and the first offset type of the current block. When the first offset type of the current block is a band type, the video decoding apparatus 20 may determine the second offset type of the current block as an edge type.

Also, the video decoding apparatus 20 according to an embodiment may determine the second offset parameter of the current block based on the second offset parameters of the surrounding blocks with reference to the second merge information about the current block obtained from the bitstream.

In operation 27, the video decoding apparatus 20 according to an embodiment may adjust the offset based on the second offset parameter to the current block to which the offset based on the first offset parameter is adjusted.

The video decoding apparatus 20 according to an embodiment may sequentially apply the first offset method and the second offset method to the reconstructed current block, thereby minimizing errors in various directions of original pixels and reconstructed pixels of the current block and errors in various types.

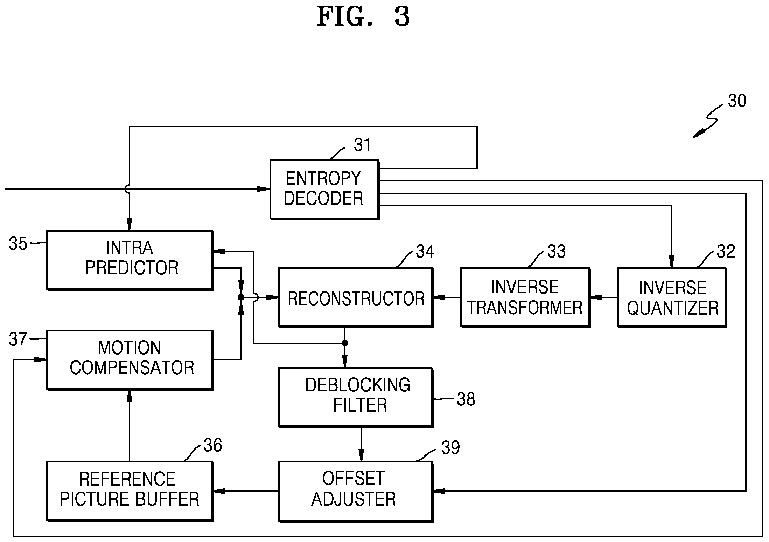

A video decoding method using a sample adaptive offset (SAO) technique will now be described in detail with reference to FIG. 3. FIG. 3 is a block diagram of a video decoding apparatus 30 according to embodiments of the present disclosure.

The video decoding apparatus 30 includes an entropy decoder 31, an inverse quantizer 32, an inverse transformer 33, a reconstructor 34, an intra predictor 35, a reference picture buffer 36, a motion compensator 37, a deblocking filter 38, and an offset adjuster 39.

The video decoding apparatus 30 may receive a bitstream including encoded video data. The entropy decoder 31 may parse intra mode information, inter mode information, offset information, and residues from the bitstream.

The offset information according to an embodiment may include, for example, offset parameters.

The residues extracted by the entropy decoder 31 may be quantized transformation coefficients. Accordingly, the inverse quantizer 32 may perform inverse quantization on the residues to reconstruct transformation coefficients, and the inverse transformer 33 may perform inverse transformation on the reconstructed coefficients to reconstruct residual values of the space domain.

In order to predict and reconstruct the residual values of the space domain, intra prediction or motion compensation may be performed.

If the intra mode information is extracted by the entropy decoder 31, the intra predictor 35 may determine reference samples to be referred to reconstruct current samples from among samples spatially adjacent to the current samples, by using the intra mode information. The reference samples may be selected from among samples previously reconstructed by the reconstructor 34. The reconstructor 34 may reconstruct the current samples by using the reference samples determined based on the intra mode information and the residual values reconstructed by the inverse transformer 33.

If the inter mode information is extracted by the entropy decoder 31, the motion compensator 37 may determine a reference picture to be referred to reconstruct current samples of a current picture from among pictures reconstructed previously to the current picture, by using the inter mode information. The inter mode information may include motion vectors, reference indices, etc. By using the reference indices, from among pictures reconstructed previously to the current picture and stored in the reference picture buffer 36, a reference picture to be used to perform motion compensation on the current samples may be determined. By using the motion vectors, a reference block of the reference picture to be used to perform motion compensation on a current block may be determined. The reconstructor 34 may reconstruct the current samples by using the reference block determined based on the inter mode information and the residual values reconstructed by the inverse transformer 33.

The reconstructor 34 may reconstruct samples and may output reconstructed pixels. The reconstructor 34 may generate reconstructed pixels of each LCU based on coding units having a tree structure.

The deblocking filter 38 may perform filtering for reducing a blocking phenomenon of pixels disposed at edge regions of the LCU or each of the coding units having a tree structure.

Also, the offset adjuster 39 may adjust offsets of a current block, for example, reconstructed pixels of each LCU according to an SAO technique. The SAO technique may include a multi-offset method.

The offset adjuster 39 may determine offset parameters, for example, an offset type, an offset class, and offset values, of the current block from the extracted offset information.

In this regard, the video decoding apparatus 30 according to an embodiment may use the multi-offset method. For example, the offset adjuster 39 may sequentially adjust a first offset method and a second offset method that have different offset information to the current block to adjust offsets.

An operation of extracting offset parameters from the offset information by the entropy decoder 31 may correspond to a parsing operation of the video decoding apparatus 20 of FIG. 2, and operations of the offset adjuster 39 may correspond to operations of the first offset method decoder 22 and the second offset method decoder 24 of the video decoding apparatus 20.

The offset adjuster 39 may determine signs and difference values of the offset values with respect to the reconstructed pixels of the current block from the offset values. The offset adjuster 39 may reduce errors between the reconstructed pixels and original pixels by increasing or reducing pixel values of the reconstructed pixels by the determined difference values.

A picture including the reconstructed pixels offset-adjusted by the offset adjuster 39 may be stored in the reference picture buffer 36. Thus, by using a reference picture having minimized errors between reconstructed samples and original pixels according to an SAO operation, motion compensation may be performed on a next picture.

According to the SAO operation, based on difference values between reconstructed pixels and original pixels, an offset of a pixel group including the reconstructed pixels may be determined. For the SAO operation, embodiments for classifying reconstructed pixels into pixel groups will now be described in detail.

According to an SAO operation, pixels may be classified (i) based on an edge type of reconstructed pixels, or (ii) a band type of reconstructed pixels. Whether pixels are classified based on an edge type or a band type may be defined by using an offset type.

Embodiments of classifying pixels based on an edge type according to an SAO operation will now be described in detail.

When edge-type offsets of a current block are determined, an offset class of each of reconstructed pixels included in the current block may be determined. In other words, by comparing pixel values of current reconstructed pixels and adjacent pixels, an offset class of the current reconstructed pixels may be defined. An example of determining an edge type offset class will now be described with reference to FIGS. 4A through 4C.

FIGS. 4A through 4C are diagrams for explaining an edge type SAO technique, according to embodiments of the present disclosure.

Referring to FIG. 4A, indices 0, 1, 2, and 3 may be sequentially allocated to edge type offset classes 41, 42, 43, and 44 according to an embodiment. For example, the edge class according to an embodiment may indicate an edge direction of 0°, 90°, 45°, or 135°.

The edge class 41 having the index 0 indicates a case when edges are formed between the current reconstructed pixel X0 and two horizontally adjacent pixels X1 and X2. The edge class 42 having the index 1 indicates a case when edges are formed between the current reconstructed pixel X0 and two vertically adjacent pixels X3 and X4. The edge class 43 having the index 2 indicates a case when edges are formed between the current reconstructed pixel X0 and two 135°-diagonally adjacent pixels X5 and X8. The edge class 44 having the index 3 indicates a case when edges are formed between the current reconstructed pixel X0 and two 45°-diagonally adjacent pixels X6 and X7.

Accordingly, by analyzing edge directions of reconstructed pixels included in a current block and thus determining a strong edge direction in the current block, an edge class of the current block may be determined.

With respect to each edge class, categories may be classified according to an edge shape of a current pixel of the current block. An example of categories according to edge shapes will now be described with reference to FIGS. 4B and 4C.

FIGS. 4B and 4C are a table and a graph showing categories of edge types, according to embodiments of the present disclosure, respectively.

An edge type category according to an embodiment may indicate whether a current pixel of the current block corresponds to a local valley of a concave edge, a pixel disposed at a curved corner around the local valley of the concave edge, a local peak of a convex edge, or a pixel disposed at a curved corner around the local peak of the convex edge. For example, the edge type category may include four categories according to the above edge shapes.

FIG. 4B exemplarily shows conditions for determining categories of edges. FIG. 4C exemplarily shows edge shapes between a reconstructed pixel and adjacent pixels and their pixel values c, a, and b.

C indicates an index of a reconstructed pixel of a current block, and a and b indicate indices of adjacent pixels at two sides of the current reconstructed pixel according to an edge direction. Xa, Xb, and Xc respectively indicate pixel values of reconstructed pixels having the indices a, b, and c. In FIG. 4C, an x axis indicate indices of the current reconstructed pixel and the adjacent pixels at two sides of the current reconstructed pixel, and a y axis indicate pixel values of samples.

Category 1 indicates a case when a current sample corresponds to a lowest point of a concave edge, i.e., a local valley ($Xc < Xa$ && $Xc < Xb$). As shown in a graph of category 1 of FIG. 4C, if the current reconstructed pixel c between the adjacent pixels a and b corresponds to a lowest point of a concave edge, the current reconstructed pixel may be classified as the category 1.

Category 2 indicates a case when a current sample is disposed at a curved corner around a lowest point of a concave edge, i.e., a concave corner ($Xc < Xa$ && $Xc == Xb$ || $Xc == Xa$ && $Xc < Xb$). As shown in graph 52, if the current reconstructed pixel c between the adjacent pixels a and b is disposed at an end point of a downward curve of a concave edge ($Xc < Xa$ && $Xc == Xb$) or, as shown in graph 53, if the current reconstructed pixel c is disposed at a start point of an upward curve of a concave edge ($Xc == Xa$ && $Xc < Xb$), the current reconstructed pixel may be classified as the category 2.

Category 3 indicates a case when a current sample is disposed at a curved corner around a highest point of a convex edge, i.e., a convex corner ($Xc > Xa$ && $Xc == Xb$ || $Xc == Xa$ && $Xc > Xb$). As shown in graph 54, if the current reconstructed pixel c between the adjacent pixels a and b is disposed at a start point of a downward curve of a convex edge ($Xc == Xa$ && $Xc > Xb$) or, as shown in graph 55, if the current reconstructed pixel c is disposed at an end point of an upward curve of a convex edge ($Xc > Xa$ && $Xc == Xb$), the current reconstructed pixel may be classified as the category 3.

Category 4 indicates a case when a current sample corresponds to a highest point of a convex edge, i.e., a local peak ($Xc > Xa$ && $Xc > Xb$). As shown in graph 56, if the current reconstructed pixel c between the adjacent pixels a and b corresponds to a highest point of a convex edge, the current reconstructed pixel may be classified as the category 4.

If the current reconstructed pixel does not satisfy any of the conditions of the categories 1, 2, 3, and 4, the current reconstructed pixel does not corresponds to an edge and thus is classified as category 0, and an offset of category 0 does not need to be encoded.

According to embodiments of the present disclosure, with respect to reconstructed pixels corresponding to the same category, an average value of difference values between the reconstructed pixels and original pixels may be determined as an offset of a current category. Also, offsets of all categories may be determined.

The concave edges of the categories 1 and 2 may be smoothed if reconstructed pixel values are adjusted by using positive offset values, and may be sharpened due to negative offset values. The convex edges of the categories 3 and 4 may be smoothed due to negative offset values and may be sharpened due to positive offset values.

The video encoding apparatus 10 may not allow the sharpening effect of edges. Here, the concave edges of the categories 1 and 2 need positive offset values, and the convex edges of the categories 3 and 4 need negative offset values. In this case, if a category of an edge is known, a sign of an offset value may be determined. Accordingly, the video encoding apparatus 10 may not transmit the sign of the offset value and may transmit only an absolute value of the offset value. Also, the video decoding apparatus 20 may not receive the sign of the offset value and may receive only an absolute value of the offset value.

Accordingly, the video encoding apparatus 10 may encode and transmit offset values according to categories of a current edge class, and the video decoding apparatus 20 may adjust reconstructed pixels of the categories by the received offset values.

For example, if an offset value of an edge type is determined as 0, the video encoding apparatus 10 may transmit only offset use information about the current block indicating that an offset is not adjusted to the current block.

For example, if the offset value of the edge type is not 0, the video encoding apparatus 10 may transmit an absolute offset value as an offset value. The video encoding apparatus 10 does not need to transmit a sign of the offset value.

The video decoding apparatus 20 may read offset use information about the current block from the received offset value and, if the offset value is not 0, may read the absolute offset value. The sign of the offset value may be predicted according to an edge category based on an edge shape between a reconstructed pixel and adjacent pixels.

Accordingly, the video encoding apparatus 10 according to an embodiment may determine categories of pixels according to edge shapes with respect to edge directions and may determine an average error value between pixels for each category as an offset value. The video encoding apparatus 10 may encode and transmit offset type information indicating an edge type, offset class information indicating an edge direction, and the offset values.

The video decoding apparatus 20 according to an embodiment may receive the offset type information, the offset class information, and the offset values. The video decoding apparatus 20 may determine an edge direction of the current block according to the offset type information and the offset class information. The video decoding apparatus 20 may determine a category corresponding to an edge shape according to the edge direction for each of reconstructed pixels and may determine an offset value corresponding to the category from among the received offset values. The video decoding apparatus 20 may adjust pixel values of the reconstructed pixels by the offset value, thereby minimizing an error between an original image and a reconstructed image.

Embodiments of classifying pixels based on a band type according to an SAO technique according to an embodiment will now be described in detail with reference to FIG. 5.

FIG. 5 is a diagram for explaining a band type SAO technique, according to an embodiment of the present disclosure.

If it is determined that pixels of a current block are classified according to band types of reconstructed pixels according to an offset type, the video decoding apparatus 20 may classify the reconstructed pixels into bands having similar values. The video decoding apparatus 20 may adjust an offset value in a band unit by using an offset parameter obtained from bitstream, thereby reducing an error between an original image and a reconstructed image.

Specifically, each of pixel values of reconstructed pixels of a current block may belong to one of a plurality of bands. For example, the pixel values may have a total range from a minimum value Min of 0 to a maximum value Max of $2^{(p-1)}$ according to p-bit sampling. If the total range (Min, Max) of the pixel values is divided into K periods, each period of the pixel values is referred to as a band. If $B_k$ indicates a maximum value of a kth band, bands $[B_0, B_1-1]$, $[B_1, B_2-1]$, $[B_2, B_3-1]$, ..., and $[B_k-1, B_k]$ may be divided. If a pixel value of a current reconstructed pixel Rec(x,y) belongs to the band $[B_k-1, B_k]$, a current band may be determined as k. The bands may be evenly or unevenly divided.

For example, referring to FIG. 5, if pixel values are classified into equal 8-bit pixel bands, the pixel values may be divided into 32 bands. In more detail, they may be classified into bands [0, 7], [8, 15], ..., [240, 247], and [248, 255].

From among a plurality of bands classified according to a band type, a band to which each of pixel values of reconstructed pixels belongs may be determined. Also, an offset value indicating an average of errors between original pixels and reconstructed pixels in each band may be determined. In this regard, offset values may not be determined with respect to all bands, but the number of pixels, from among pixels included in a current LCU, belonging to each band may be determined, and offset values of adjacent bands may be determined with respect to a band having many pixels belonging thereto.

For example, referring to FIG. 5, a band group 57 may be determined based on a sample number 59 for each band of a current block, and offset values of bands included in the determined band group 57 may be determined. For example, the band group 57 may include 4 bands the most samples of the current block belonging to, from among 32 bands, and may signal offset values of each of the 4 bands included in the band group 57 but the present embodiment is not limited thereto. Some of the bands may be determined by using various methods of minimizing RD cost, and some of the determined bands, when the RD cost is small, may be determined as bands for finally adjusting reconstructed pixel values.

Accordingly, the video encoding apparatus 10 and the video decoding apparatus 20 may encode and transceive an offset corresponding to each of bands classified according to an offset type of the current block, and may adjust the offset to reconstructed pixels.

Accordingly, with respect to a band type, the video encoding apparatus 10 and the video decoding apparatus 20 may classify reconstructed pixels according to bands to which their pixel values belong, may determine an offset as an average of error values of reconstructed pixels that belong to the same band, and may adjust the reconstructed pixels by the offset, thereby minimizing an error between an original image and a reconstructed image.

When an offset according to a band type is determined, the video encoding apparatus 10 and the video decoding apparatus 20 may classify reconstructed pixels into categories according to a band position. For example, if the total range of the pixel values is divided into K bands, categories may be indexed according to a band index k indicating a kth band. The number of categories may be determined to correspond to the number of bands.

However, in order to reduce data, the video encoding apparatus 10 and the video decoding apparatus 20 may restrict the number of categories used to determine offsets. For example, a predetermined number of bands that are continuous from a band having a predetermined start position in a direction in which a band index is increased may be allocated to categories, and only an offset of each category may be determined.

For example, referring to FIG. 5, if a band 88~95 having an index of 12 is determined as a start band, four bands from the start band, i.e., bands having indices of 12, 13, 14, and 15 may be respectively allocated to categories 1, 2, 3, and 4. Accordingly, an average error between reconstructed pixels and original pixels included in a band having the index of 12 may be determined as an offset O1 of category 1. Likewise, an average error between reconstructed pixels and original pixels included in a band 96~103 having the index of 13 may be determined as an offset 02 of category 2, an average error between reconstructed pixels and original pixels included in a band 104~111 having the index of 14 may be determined as an offset O3 of category 3, and an average error between reconstructed pixels and original pixels included in a band 112~119 having the index of 15 may be determined as an offset 04 of category 4.

In this case, information about a start position of a band range, i.e., the position of a left band, is required to determine positions of bands allocated to categories. Accordingly, the video encoding apparatus 10 may encode and transmit left start point information indicating the position of the left band, as the offset class.

For example, referring to FIG. 5, information P1 indicating the left start band 88~95 of the band group 57 may be encoded and transmitted.

The video encoding apparatus 10 may encode and transmit an offset type indicating a band type, an offset class, and offset values according to categories.

For example, referring to FIG. 5, the video encoding apparatus 10 may encode and transmit the information 01, 02, 03, and 04 indicating an offset value 58 for each band of the band group 57. The video decoding apparatus 20 according to an embodiment may receive the offset type, the offset class, and the offset values according to the categories. If the received offset type is a band type, the video decoding apparatus 20 may read a start band position from the offset class. The video decoding apparatus 20 may determine a band to which reconstructed pixels belong, from among four bands from the start band, may determine an offset value allocated to a current band from among the offset values according to the categories, and may adjust the offset value to the reconstructed pixels.

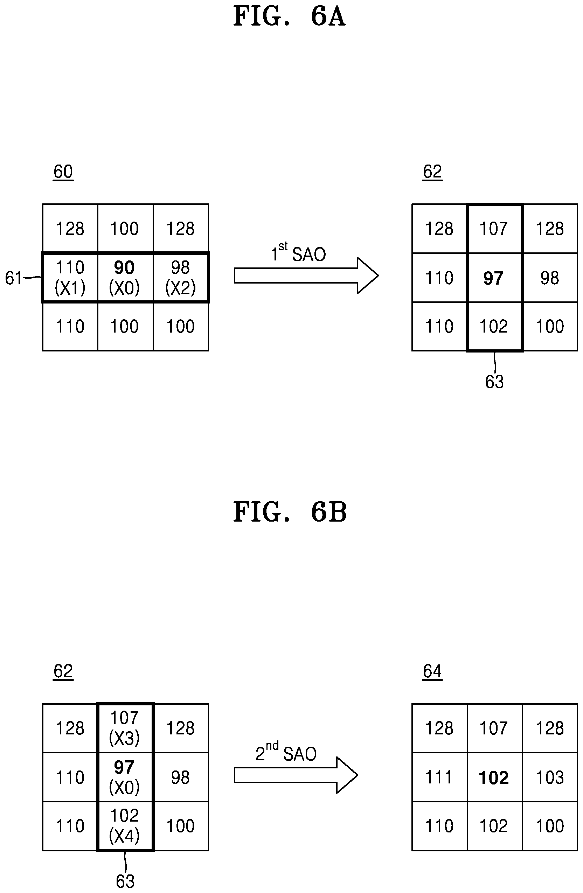

FIGS. 6A and 6B are diagrams for explaining a method of applying a multi-offset method, according to embodiments of the present disclosure.

Referring to FIG. 6A, a current block 60 includes a plurality of reconstructed pixels. For example, the reconstructed current block 60 may include reconstructed pixels having values of 128, 100, 128, 110, 90, 98, 110, 100, and 100.

In this regard, the video decoding apparatus 20 that applies a multi-offset method according to an embodiment may reduce an error of a reconstructed pixel value by applying an SAO technique to the current block 60. For example, the video decoding apparatus 20 may adjust an offset according to a first offset method to the current block 60.

Specifically, the video decoding apparatus 20 according to an embodiment may apply a first offset method of an edge type to the current block 60. Referring to FIG. 6A, an edge direction of a row 61 of the current block 60 may be a horizontal direction. That is, edges are formed between the current reconstructed pixel X0 of the row 61 and two horizontally adjacent pixels X1 and X2. Also, a pixel value of the current reconstructed pixel X0 is 90 and pixel values of the adjacent pixels X1 and X2 are 110 and 98, respectively, and thus an offset category of the current reconstructed pixel X0 may be determined as category 1.

Accordingly, the video decoding apparatus 20 according to an embodiment may apply an offset value of category 1 to the current reconstructed pixel X0 of the current block 60. For example, an offset value of category 1 may be 7. In a current block 62 to which an offset according to a first offset method is applied, a pixel value of the current reconstructed pixel X0 may be 97. Also, an offset value of category 1 and an offset value of category 2 may also be respectively adjusted to an upper reconstruction pixel and a lower reconstructed pixel of the current reconstructed pixel X0.

In this regard, in regards to pixel values of the current block 62 to which the first offset method is applied, a pixel value of a column 63 may be adjusted by the first offset method and thus an error may be reduced. However, the current block 62 to which the first offset method is applied may still have an error of an edge type or a band type. Alternatively, some pixels of the current block 62 may have a greater error caused by applying the first offset method.

Therefore, the video decoding apparatus 20 according to an embodiment may apply a second offset method to the current block 62 to which the first offset method is applied. For example, the second offset method may be applied in a band type different from an offset type of the first offset method, and, even if an edge type that is the same as the offset type of the first offset method is adjusted, may be applied in an offset class in a different direction from an offset class of the first offset method. Also, the second offset method may be applied by offset values different from offset values of the first offset method.

Referring to FIG. 6B, a column 63 of the current block 62 to which the first offset method is applied may include an error in a vertical direction. Thus, the video decoding apparatus 20 according to an embodiment may adjust an offset based on the second offset method of an edge type in a vertical direction to the current block 62 to which the first offset method is applied, thereby reducing an error.

Specifically, referring to FIG. 6B, edges are formed between the current reconstructed pixel X0 of the current block 62 and two horizontally adjacent pixels X3 and X4. Also, a pixel value of the current reconstructed pixel X0 of the current block 62 to which the first offset method is applied is 97 and pixel values of the adjacent pixels X3 and X4 are 107 and 102, respectively, and thus an offset category of the current reconstructed pixel X0 may be determined as category 1.

Accordingly, the video decoding apparatus 20 according to an embodiment may apply an offset value of category 1 to the current reconstructed pixel X0 of the current block 62 to which the first offset method is applied. An offset value of category 1 of the second offset method according to an embodiment may be different from the offset value of category 1 of the first offset method. For example, the offset value of category 1 of the second offset method may be 5. In a current block 64 to which the offset according to the second offset method is applied, a pixel value of the current reconstructed pixel X0 may be 102.

Also, an offset value of category 2 and an offset value of category 1 may also be respectively adjusted to a left reconstruction pixel and a right reconstructed pixel of the current reconstructed pixel X0.

The video decoding apparatus 20 according to an embodiment may sequentially adjust the offsets according to the first offset method and the second offset method to the current block 64, thereby reducing errors between pixel values.

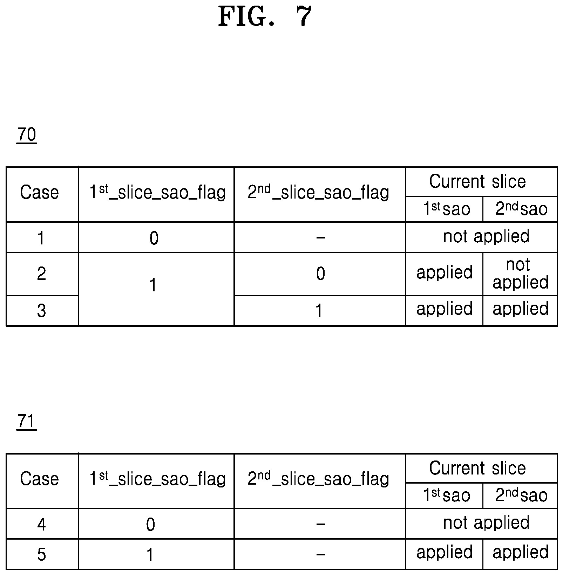

FIG. 7 is a table showing syntax elements of a plurality of pieces of use information about a multi-offset method with respect to slices, according to various embodiments of the present disclosure.

The video decoding apparatus 20 according to an embodiment may obtain a plurality of pieces of information indicating whether to apply the multi-offset method to a current slice from bitstream to determine whether to apply the multi-offset method.

Referring to table 70 indicating a plurality of pieces of information indicating the multi-offset method according to an embodiment, the video decoding apparatus 20 may obtain at least one of first offset use information 1st_slice_sao_flag about the current slice indicating whether to apply a first offset method to the current slice and second offset use information 2nd_slice_sao_flag about the current slice indicating whether to apply a second offset method to the current slice from bitstream.

For example, the first offset use information 1st_slice_sao_flag about the current slice and the second offset use information 2nd_slice_sao_flag about the current slice, which are syntax elements in a slice unit, may be included in a slice header and received in the video decoding apparatus 20. The video decoding apparatus 20 according to an embodiment may perform entropy encoding on the received bitstream, thereby obtaining at least one of the first offset use information 1st_slice_sao_flag about the current slice and the second offset use information 2nd_slice_sao_flag about the current slice.

Specifically, the video decoding apparatus 20 according to an embodiment may previously obtain the first offset use information 1st_slice_sao_flag about the current slice from the bitstream. For example, the first offset use information 1st_slice_sao_flag about the current slice according to an embodiment may be 1 bit. The video decoding apparatus 20 according to an embodiment may not adjust an offset based on the first offset method to the current slice when the obtained first offset use information 1st_slice_sao_flag about the current slice is 0 and may adjust the offset based on the first offset method to the current slice when the obtained first offset use information 1st_slice_sao_flag about the current slice is 1.

Also, the video decoding apparatus 20 according to an embodiment may not obtain the second offset use information 2nd_slice_sao_flag about the current slice and may determine both the first offset method and the second offset method not to be applied to the current slice when the obtained first offset use information 1st_slice_sao_flag about the current slice is 0.

Also, the video decoding apparatus 20 according to an embodiment may determine the first offset method to be applied to the current slice and may additionally obtain the second offset use information 2nd_slice_sao_flag about the current slice when the obtained first offset use information 1st_slice_sao_flag about the current slice is 1.

The second offset use information 2nd_slice_sao_flag about the current slice according to an embodiment may be 1 bit. The video decoding apparatus 20 according to an embodiment may not adjust an offset based on the second offset method to the current slice when the obtained second offset use information 2nd_slice_sao_flag about the current slice is 0 and may adjust the offset based on the second offset method to the current slice when the obtained second offset use information 2nd_slice_sao_flag about the current slice is 1.

The first offset use information 1st_slice_sao_flag about the current slice and the second offset use information 2nd_slice_sao_flag about the current slice according to an embodiment may be obtained for each component of the current slice. For example, the first offset use information 1st_slice_sao_flag about the current slice and the second offset use information 2nd_slice_sao_flag about the current slice may be obtained and used for a luma sample (a Y component) and first and second chroma samples (Cr and Cb components) of a YCrCb color image.

Referring to table 71 indicating a plurality of pieces of information indicating the multi-offset method according to another embodiment, the video decoding apparatus 20 may obtain only the first offset use information 1st_slice_sao_flag about the current slice indicating whether to apply the first offset method to the current slice to determine whether to apply the first offset method and the second offset method.

Specifically, the video decoding apparatus 20 may determine whether to apply the first offset method and the second offset method based on first offset use information about the current slice of 1 bit.

For example, the video decoding apparatus 20 according to an embodiment may determine both the offset based on the first offset method and the offset based on the second offset method not to be applied to the current slice when the first offset use information 1st_slice_sao_flag about the current slice is 0.

Also, the video decoding apparatus 20 according to an embodiment may determine both the offset based on the first offset method and the offset based on the second offset method to be applied to the current slice when the first offset use information 1st_slice_sao_flag about the current slice is 1. That is, the video decoding apparatus 20 according to an embodiment may determine whether to apply multi-offset only by using 1 bit in order to increase encoding efficiency, excluding a case where only the first offset method is applied to a current block.

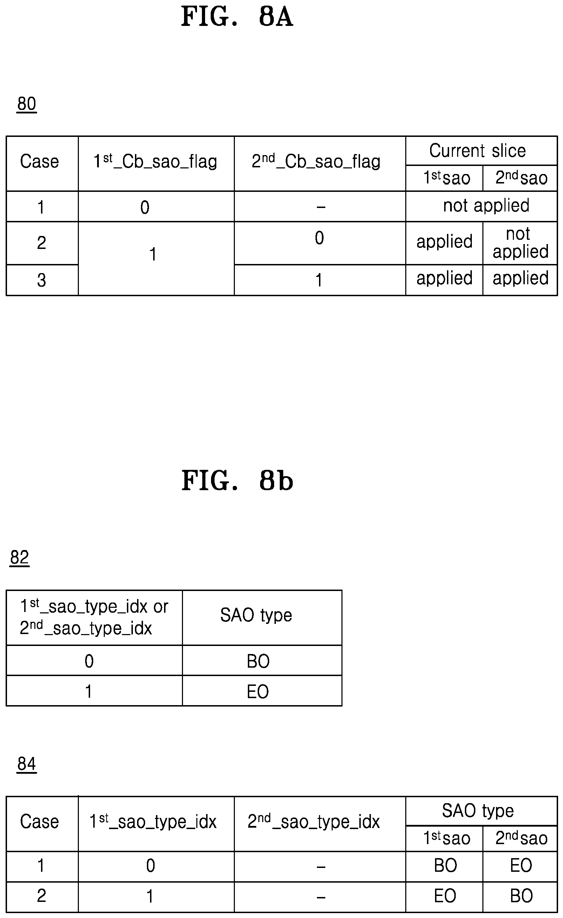

FIGS. 8A through 8C are tables showing syntax elements with respect to a current block, according to various embodiments of the present disclosure.

The video decoding apparatus 20 according to various embodiments may obtain a plurality of pieces of information indicating whether to apply the multi-offset method to a current block from bitstream to determine whether to apply a multi-offset method.

Referring to table 80 of FIG. 8A, the video decoding apparatus 20 according to an embodiment may obtain at least one of first offset use information 1st_cb_sao_flag about the current block indicating whether to apply a first offset method to the current block and second offset use information 2nd_cb_sao_flag about the current block indicating whether to apply a second offset method to the current block from bitstream. For example, the first offset use information 1st_cb_sao_flag about the current block and the second offset use information 2nd_cb_sao_flag about the current block, which are syntax elements in a block unit, may be obtained by the video decoding apparatus 20 according to an embodiment by performing entropy encoding on the received bitstream.

The video decoding apparatus 20 according to an embodiment may obtain the first offset use information 1st_cb_sao_flag about the current block when the first offset use information about a current slice including the current block is 1. Also, the video decoding apparatus 20 according to an embodiment may obtain the second offset use information 2nd_cb_sao_flag about the current block when the second offset use information about the current slice including the current block is 1.

Also, the video decoding apparatus 20 according to an embodiment may previously obtain the first offset use information 1st_cb_sao_flag about the current block from the bitstream. For example, the first offset use information 1st_cb_sao_flag about the current block according to an embodiment may be 1 bit. The video decoding apparatus 20 according to an embodiment may not adjust an offset based on the first offset method to the current block when the obtained first offset use information 1st_cb_sao_flag about the current block is 0 and may adjust the offset based on the first offset method to the current block when the obtained first offset use information 1st_cb_sao_flag about the current block is 1.

Also, the video decoding apparatus 20 according to an embodiment may not obtain the second offset use information 2nd_cb_sao_flag about the current block and may determine both the first offset method and the second offset method not to be applied to the current block when the obtained first offset use information 1st_cb_sao_flag about the current block is 0.

Also, the video decoding apparatus 20 according to an embodiment may determine the first offset method to be applied to the current block and may additionally obtain the second offset use information 2nd_cb_sao_flag about the current block when the obtained first offset use information 1st_cb_sao_flag about the current block is 1.

The second offset use information 2nd_cb_sao_flag about the current block according to an embodiment may be 1 bit. The video decoding apparatus 20 according to an embodiment may not adjust an offset based on the second offset method to the current block when the obtained second offset use information 2nd_cb_sao_flag about the current block is 0 and may adjust the offset based on the second offset method to the current block when the obtained second offset use information 2nd_cb_sao_flag about the current block is 1.

The first offset use information 1st_cb_sao_flag about the current block and the second offset use information 2nd_cb_sao_flag about the current block according to an embodiment may be obtained for each component of the current slice. For example, the first offset use information 1st_cb_sao_flag about the current block and the second offset use information 2nd_cb_sao_flag about the current block may be obtained and used for a luma sample (a Y component) and first and second chroma samples (Cr and Cb components) of a YCrCb color image.

Also, referring to table 82 of FIG. 8B, the video decoding apparatus 20 according to an embodiment may obtain a plurality of pieces of information indicating an offset type of the current block from bitstream to determine whether to apply a multi-offset method.

Specifically, the video decoding apparatus 20 according to an embodiment may obtain information 1st_sao_type_idx indicating an offset type of the first offset method of the current block and information 2nd_sao_type_idx indicating an offset type of the second offset method of the current block. For example, the first offset type information 1st_sao_type_idx about the current block and the second offset type information 2nd_sao_type_idx about the current block, which are syntax elements in a block unit, may be obtained by the video decoding apparatus 20 according to an embodiment by performing entropy decoding on the received bitstream.

For example, the first offset type information 1st_sao_type_idx about the current block and the second offset type information 2nd_sao_type_idx about the current block according to an embodiment may be information of 1 bit and may indicate band types when they are 0 and indicate edge types when they are 1.

The first offset type information 1st_sao_type_idx about the current block and the second offset type information 2nd_sao_type_idx about the current block according to an embodiment may be obtained for each component of the current slice. For example, the first offset type information 1st_sao_type_idx about the current block and the second offset type information 2nd_sao_type_idx about the current block may be obtained and used for a luma sample (a Y component) and first and second chroma samples (Cr and Cb components) of a YCrCb color image.

Referring to table 84 of FIG. 8B, the video decoding apparatus 20 according to another embodiment may obtain only first offset use information about the current block to determine the first offset type and the second offset type.

Specifically, the video decoding apparatus 20 may determine the first offset type and the second offset type based on the first offset use information about the current block.

The video decoding apparatus 20 according to an embodiment may not directly obtain second offset type information and may determine an offset type of the first offset method based on the first offset type information. For example, when the first offset use information about the current block is 0, the video decoding apparatus 20 according to an embodiment may determine the first offset type of the current block as a band type and the second offset type of the current block as an edge type.

Also, when the first offset use information about the current block is 1, the video decoding apparatus 20 according to an embodiment may determine the first offset type of the current block as the edge type and the second offset type of the current block as the band type.

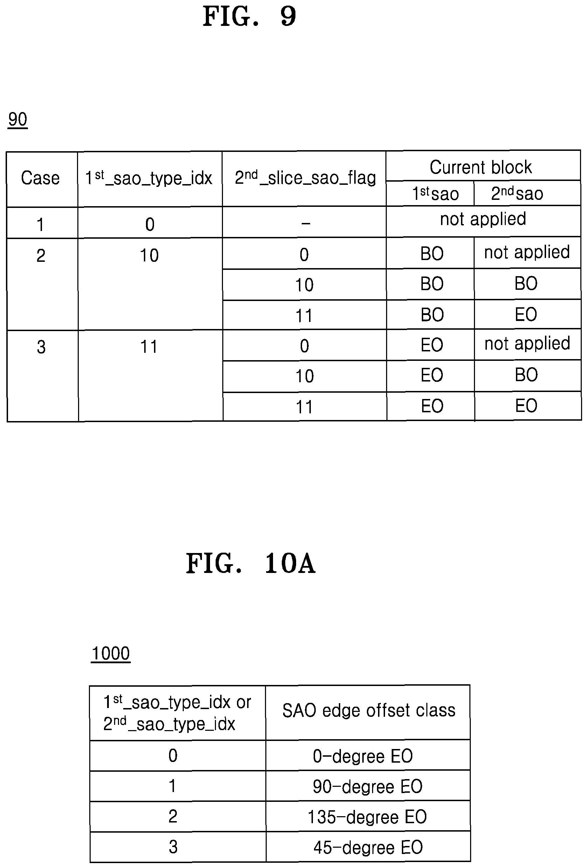

FIG. 9 is a table showing syntax elements of a plurality of pieces of information indicating an offset type of a current block, according to an embodiment of the present disclosure.

Referring to table 90, the video decoding apparatus 20 according to an embodiment may obtain the plurality of pieces of information indicating the offset type of the current block from bitstream.

Specifically, the video decoding apparatus 20 according to an embodiment may obtain at least one of the information 1st_sao_type_idx indicating an offset type of a first offset method of the current block and the information 2nd_ sao_type_idx indicating an offset type of a second offset method of the current block. For example, the first offset type information 1st_sao_type_idx about the current block and the second offset type information 2nd_sao_type_idx about the current block, which are syntax elements in a block unit, may be obtained by the video decoding apparatus 20 according to an embodiment by performing entropy decoding on the received bitstream.

Referring to table 90, first offset type information about the current block according to an embodiment may include first offset use information about the current block. For example, the first offset type information may include a first bit indicating whether to apply the first offset method to the current block and a second bit indicating an offset type of the first offset method with respect to the current block. For example, the offset type may be an edge type or a band type.

Thus, the video decoding apparatus 20 according to an embodiment may obtain the first bit of the first offset type information to determine whether to apply the first offset method to the current block and, when the first bit is 1, may obtain the second bit of the first offset type information to determine the first offset type of the current block. The video decoding apparatus 20 may not obtain the second bit of the first offset type information when the first bit of the first offset type information is 0.

Also, when the first bit of the first offset type information is 1, the video decoding apparatus 20 according to an embodiment may obtain the second offset type information about the current block. The video decoding apparatus 20 may obtain the first bit of the second offset type information to determine whether to apply the second offset method to the current block and, when the first bit is 1, may obtain the second bit of the second offset type information to determine the second offset type of the current block. The video decoding apparatus 20 may not obtain the second bit of the second offset type information when the first bit of the second offset type information is 0.

The first offset type information and the second offset type information about the current block according to an embodiment may be obtained for each component of the current slice. For example, for a luma sample (a Y component) and first and second chroma samples (Cr and Cb components) of a YCrCb color image, the first offset type information and the second offset type information about the current block may be obtained and used.

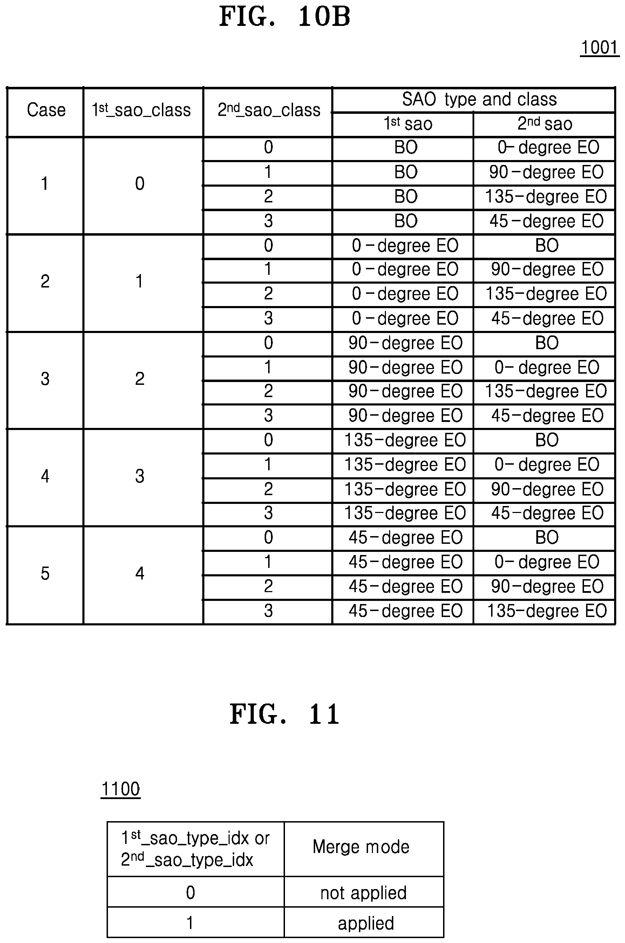

FIGS. 10A and 10B are tables showing syntax elements of a plurality of pieces of information indicating an offset class of a multi-offset method with respect to a current block, according to various embodiments of the present disclosure.

Referring to table 1000 of FIG. 10A, the video decoding apparatus 20 according to an embodiment may obtain the plurality of pieces of information indicating the offset class of the current block and may determine the offset class of the multi-offset method.

Specifically, the video decoding apparatus 20 according to an embodiment may obtain information 1st_sao_eo_class indicating an offset class of a first offset method of the current block and information 2nd_sao_eo_class indicating an offset class of a second offset method of the current block. For example, the first offset class information 1st_sao_eo_class about the current block and the second offset class information 2nd_sao_eo_class about the current block, which are syntax elements in a block unit, may be obtained by the video decoding apparatus 20 according to an embodiment by performing entropy decoding on the received bitstream.

For example, the first offset class information 1st_sao_eo_class about the current block and the second offset class information 2nd_sao_eo_class about the current block according to an embodiment may be information of 2 bits and may indicate a class of one of a horizontal direction, a vertical direction, a 135° diagonal direction, and a 45° diagonal direction of an edge type.

The first offset class information and the second offset class information about the current block according to an embodiment may be obtained for each component of a current slice. For example, for a luma sample (a Y component) and first and second chroma samples (Cr and Cb components) of a YCrCb color image, the first offset class information and the second offset class information about the current block may be obtained and used.

Also, the first offset class information and the second offset class information about the current block according to an embodiment may include left start point information of 5 bits indicating a position of a left band in order to determine a band range in case of a band type.

Alternatively, referring to table 1001 of FIG. 10B, the plurality of pieces of information indicating the offset class of the current block according to another embodiment may be illustrated. For example, the video decoding apparatus 20 according to another embodiment may include first offset class information 1st_ sao_class about the current block and second offset class information 2nd_ sao_class about the current block. The first offset class information 1st_sao_class about the current block may be information indicating an offset type and an offset class of a first offset method. Also, the second offset class information 2nd_sao_class about the current block may be information indicating an offset type and an offset class of a second offset method.

For example, the first offset class information about the current block may be information of 3 bits and may be information indicating one of a band offset type, an edge offset type of a horizontal direction, an edge offset type of a vertical direction, an edge offset type of a 135° diagonal direction, and an edge offset type of a 45° diagonal direction. For example, when the first offset class information about the current block is 0, 1, 2, 3, and 4, a band offset type, an edge offset type of a horizontal direction, an edge offset type of a vertical direction, an edge offset type of a 135° diagonal direction, and an edge offset type of a 45° diagonal direction may be indexed for each of 0, 1, 2, 3, and 4. The video decoding apparatus 20 may determine an offset type and an offset class of the first offset method with reference to the first offset class information about the current block.

Also, the second offset class information about the current block may be information indicating one of a band offset type, an edge offset type of a horizontal direction, an edge offset type of a vertical direction, an edge offset type of a 135° diagonal direction, and an edge offset type of a 45° diagonal direction, excluding the offset class indicated by the first offset class information about the current block.

For example, when the first offset class information about the current block indicates the band offset, the second offset class information about the current block may be information of 2 bits indexing one of an edge offset type of a horizontal direction, an edge offset type of a vertical direction, an edge offset type of a 135° diagonal direction, and an edge offset type of a 45° diagonal direction. Thus, the first offset class information and the second offset class information about the current block may have different indexes.

For example, the second offset class information about the current block may sequentially index offset classes as 0, 1, 2, and 3, excluding the offset class of the first offset method among a band offset type, an edge offset type of a horizontal direction, an edge offset type of a vertical direction, an edge offset type of a 135° diagonal direction, and an edge offset type of a 45° diagonal direction. That is, the first offset class information and the second offset class information about the current block may indicate different offset classes although they have the same value.

The video decoding apparatus 20 according to another embodiment may determine the first offset type and the second offset class of the current block and the second offset type and the second offset class of the current block by using the first offset class information of 3 bits about the current block and the second offset class information of 2 bits about the current block.

FIG. 11 is a table for explaining a method of applying a multi-offset method using a merge mode, according to an embodiment of the present disclosure.

The video decoding apparatus 20 according to an embodiment may determine a first offset parameter and a second offset parameter of a current block based on first offset parameters and second offset parameters of adjacent blocks. The adjacent blocks of the current block according to an embodiment may be left blocks or upper blocks of the current block.

For example, the video decoding apparatus 20 according to an embodiment may obtain first offset merge information 1st_sao_merge_flag about the current block and second offset merge information 2nd_sao_merge_flag about the current block and may determine whether to determine the first offset parameter and the second offset parameter of the current block based on the first offset parameters and the second offset parameters of the adjacent blocks.

The first offset merge information 1st_sao_merge_flag about the current block and the second offset merge information 2nd_sao_merge_flag about the current block according to an embodiment may be syntax elements in a block unit and may indicate whether to determine the first offset parameter of the current block based on the first offset parameters of the adjacent blocks and whether to determine the second offset parameter of the current block based on the second offset parameters of the adjacent blocks, respectively. The video decoding apparatus 20 according to an embodiment may obtain first and/or second offset parameters by performing entropy decoding on received bitstrem.

For example, when first offset use information about a current slice including the current block indicates that the first offset method is applied to the current slice, the video decoding apparatus 20 according to an embodiment may obtain the first offset merge information about the current block from bitstream.

When the first offset merge information is 1, the video decoding apparatus 20 according to an embodiment may determine the first offset parameter of the current block based on a first offset parameter of a left block or an upper block of the current block.

Also, when the first offset merge information is 0, the video decoding apparatus 20 according to an embodiment may determine the first offset parameter of the current block from bitstream.

Also, the video decoding apparatus 20 according to an embodiment may separately obtain merge information indicating whether to refer to first offset merge information of the left block of the current block and merge information indicating whether to refer to first offset merge information of the upper block of the current block. For example, the video decoding apparatus 20 may previously obtain the merge information indicating whether to refer to the first offset merge information of the left block of the current block and, when it is determined that the first offset merge information of the left block is not referred to, may obtain the merge information indicating whether to refer to the first offset merge information of the upper block of the current block.

Also, when it is determined that the second offset method is applied to the current slice, the video decoding apparatus 20 may obtain the second offset merge information about the current block with reference to the first offset use information about the current slice or the second offset use information about the current slice.

When the second offset merge information is 1, the video decoding apparatus 20 according to an embodiment may determine the second offset parameter of the current block based on a second offset parameter of the left block or the upper block of the current block.

Also, when the second offset merge information is 0, the video decoding apparatus 20 according to an embodiment may obtain the second offset parameter of the current block from bitstream or may determine the second offset parameter of the current block based on the first offset parameter.

Also, the video decoding apparatus 20 according to an embodiment may separately obtain merge information indicating whether to refer to second offset merge information of the left block of the current block and merge information indicating whether to refer to second offset merge information of the upper block of the current block. For example, the video decoding apparatus 20 may previously obtain the merge information indicating whether to refer to the second offset merge information of the left block of the current block and, when it is determined that the second offset merge information of the left block is not referred to, may obtain the merge information indicating whether to refer to the second offset merge information of the upper block of the current block.

Therefore, the video encoding apparatus 10 and the video decoding apparatuses 20 and 30 according to various embodiments may apply the multi-offset method like the first offset method and the second offset method to reconstructed current blocks, thereby minimizing errors in various directions and various types and reducing unexpected errors.

In the video encoding apparatus 10 and the video decoding apparatuses 20 and 30 according to various embodiments, video data may be split into LCUs, each LCU may be encoded and decoded based on coding units having a tree structure, and each LCU may determine offset values according to pixel classification. Hereinafter, a video encoding method, a video encoding apparatus, a video decoding method, and a video decoding apparatus based on coding units having a tree structure and transformation units will be described with reference to FIGS. 12 through 31.

FIG. 12 is a block diagram of a video encoding apparatus 100 based on coding units having a tree structure, according to an embodiment of the present disclosure.

The video encoding apparatus involving video prediction based on coding units according to a tree structure 100 according to an embodiment includes a largest coding unit splitter 110, a coding unit determiner 120, and an output unit 130. Hereinafter, for convenience of description, the video encoding apparatus involving video prediction based on coding units according to a tree structure 100 will be abbreviated to the 'video encoding apparatus 100'.

The largest coding unit splitter 110 may split a current picture based on a largest coding unit that is a coding unit having a maximum size for a current picture of an image If the current picture is larger than the largest coding unit, image data of the current picture may be split into the at least one largest coding unit. The largest coding unit according to an embodiment may be a data unit having a size of 32x32, 64x64, 128x128, 256x256, etc., wherein a shape of the data unit is a square having a width and length in squares of 2. The image data may be output to the coding unit determiner 120 for at least one LCU.

A coding unit according to an embodiment may be characterized by a maximum size and a depth. The depth denotes the number of times the coding unit is spatially split from the largest coding unit, and as the depth deepens, deeper coding units according to depths may be split from the largest coding unit to a smallest coding unit. A depth of the largest coding unit is an uppermost depth and a depth of the minimum coding unit is a lowermost depth. Since a size of a coding unit corresponding to each depth decreases as the depth of the largest coding unit deepens, a coding unit corresponding to an upper depth may include a plurality of coding units corresponding to lower depths.

As described above, the image data of the current picture is split into the largest coding units according to a maximum size of the coding unit, and each of the largest coding units may include deeper coding units that are split according to depths. Since the largest coding unit according to an embodiment is split according to depths, the image data of a spatial domain included in the largest coding unit may be hierarchically classified according to depths.

A maximum depth and a maximum size of a coding unit, which limit the total number of times a height and a width of the largest coding unit are hierarchically split, may be predetermined.

The coding unit determiner 120 encodes at least one split region obtained by splitting a region of the largest coding unit according to depths, and determines a depth to output a finally encoded image data according to the at least one split region. That is, the coding unit determiner 120 determines a coded depth by encoding the image data in the deeper coding units according to depths, according to the largest coding unit of the current picture, and selecting a depth having the least encoding error. The determined coded depth and image data according to largest coding units are output to the output unit 130.

The image data in the largest coding unit is encoded based on the deeper coding units corresponding to at least one depth equal to or below the maximum depth, and results of encoding the image data are compared based on each of the deeper coding units. A depth having the minimum encoding error may be selected after comparing encoding errors of the deeper coding units. At least one coded depth may be selected for each largest coding unit.

The size of the largest coding unit is split as a coding unit is hierarchically split according to depths, and as the number of coding units increases. Also, even if coding units correspond to the same depth in one largest coding unit, it is determined whether to split each of the coding units corresponding to the same depth to a lower depth by measuring an encoding error of the image data of the each coding unit, separately. Accordingly, even when image data is included in one largest coding unit, an encoding error may differ according to regions in the one largest coding unit, and thus the coded depth may differ according to regions in the image data. Thus, one or more coded depths may be determined in one largest coding unit, and the image data of the largest coding unit may be divided according to coding units of at least one coded depth.

Accordingly, the coding unit determiner 120 according to the embodiment may determine coding units having a tree structure included in the largest coding unit. The 'coding units having a tree structure' according to an embodiment include coding units corresponding to a depth determined to be the coded depth, from among all deeper coding units included in the largest coding unit. A coding unit of a coded depth may be hierarchically determined according to depths in the same region of the largest coding unit, and may be independently determined in different regions. Equally, a coded depth in a current region may be independently determined from a coded depth in another region.

A maximum depth according to an embodiment is an index related to the number of splitting times from a largest coding unit to a smallest coding unit. A first maximum depth according to an embodiment may denote the total number of splitting times from the largest coding unit to the smallest coding unit. A second maximum depth according to an embodiment may denote the total number of depth levels from the largest coding unit to the smallest coding unit. For example, when a depth of the largest coding unit is 0, a depth of a coding unit, in which the largest coding unit is split once, may be set to 1, and a depth of a coding unit, in which the largest coding unit is split twice, may be set to 2. In this case, if the minimum coding unit is a coding unit in which the largest coding unit is split four times, depth levels of depths 0, 1, 2, 3, and 4 exist, and thus the first maximum depth may be set to 4, and the second maximum depth may be set to 5.

Prediction encoding and transformation may be performed according to the largest coding unit. The prediction encoding and the transformation are also performed based on the deeper coding units according to a depth equal to or depths less than the maximum depth, according to the largest coding unit.

Since the number of deeper coding units increases whenever the largest coding unit is split according to depths, encoding, including the prediction encoding and the transformation, is performed on all of the deeper coding units generated as the depth deepens. For convenience of description, the prediction encoding and the transformation will now be described based on a coding unit of a current depth, in a largest coding unit.

The video encoding apparatus 100 according to the embodiment may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the largest coding unit, the prediction encoding may be performed based on a coding unit corresponding to a coded depth according to an embodiment, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit and a data unit obtained by splitting at least one of a height and a width of the prediction unit. A partition is a data unit where a prediction unit of a coding unit is split, and a prediction unit may be a partition having the same size as a coding unit.

For example, when a coding unit of 2Nx2N (where N is a positive integer) is no longer split and becomes a prediction unit of 2Nx2N, and a size of a partition may be 2Nx2N, 2NxN, Nx2N, or NxN. Examples of a partition type may include symmetrical partitions obtained by symmetrically splitting a height or width of the prediction unit, and may selectively include partitions obtained by asymmetrically splitting the height or width of the prediction unit, such as 1:n or n:1, partitions obtained by geometrically splitting the prediction unit, and partitions having arbitrary types.

A prediction mode of the prediction unit may be at least one of an intra mode, a inter mode, and a skip mode. For example, the intra mode and the inter mode may be performed on the partition of 2Nx2N, 2NxN, Nx2N, or NxN. Also, the skip mode may be performed only on the partition of 2Nx2N. The encoding is independently performed on one prediction unit in a coding unit, so that a prediction mode having a minimum encoding error may be selected.

The video encoding apparatus 100 according to an embodiment may also perform the transformation on the image data in a coding unit based not only on the coding unit for encoding the image data, but also based on a data unit that is different from the coding unit. In order to perform the transformation in the coding unit, the transformation may be performed based on a transformation unit having a size less than or equal to the coding unit. For example, the transformation unit may include a data unit for an intra mode and a transformation unit for an inter mode.

The transformation unit in the coding unit may be recursively split into smaller sized regions in the similar manner as the coding unit according to the tree structure, thus, residual data of the coding unit may be divided according to the transformation unit having the tree structure according to a transformation depth.

A transformation depth indicating the number of splitting times to reach the transformation unit by splitting the height and width of the coding unit may also be set in the transformation unit. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. In other words, the transformation unit having the tree structure may be set according to the transformation depths.

Encoding information according to coded depths requires not only information about a coded depth, but also about information related to prediction and transformation. Accordingly, the coding unit determiner 120 not only determines a coded depth having a minimum encoding error, but also determines a partition type of splitting a prediction unit into a partition, a prediction mode according to prediction units, and a size of a transformation unit for transformation.

Coding units according to a tree structure in a largest coding unit and methods of determining a prediction unit/partition, and a transformation unit, according to embodiments, will be described in detail later with reference to FIGS. 7 through 19.

The coding unit determiner 120 may measure an encoding error of deeper coding units according to depths by using Rate-Distortion Optimization based on Lagrangian multipliers.

The output unit 130 outputs the image data of the largest coding unit, which is encoded based on the at least one coded depth determined by the coding unit determiner 120, and encoding mode information according to depths, in bitstreams.

The encoded image data may be obtained by encoding residual data of an image.

The encoding mode information according to depths may include coded depth information, information about the partition type of the prediction unit, information about the prediction mode, and information about size of the transformation unit.

The coded depth information may be defined by using split information according to depths, which indicates whether encoding is performed on coding units of a lower depth instead of a current depth. If the current depth of the current coding unit is a coded depth, the current coding unit is encoded to a coding unit of a current depth, and thus the split information of the current depth may be defined not to split the current coding unit to a lower depth. On the contrary, if the current depth of the current coding unit is not the depth, the encoding has to be performed on the coding unit of the lower depth, and thus the split information of the current depth may be defined to split the current coding unit to the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one largest coding unit, and coded depth information is determined for a coding unit of a coded depth, at least one piece of coded depth information may be determined for one largest coding unit. Also, a coded depth of the image data of the largest coding unit may be different according to locations since the image data is hierarchically split according to depths, and thus a coded depth and coded depth information may be set for the image data.

Accordingly, the output unit 130 according to the embodiment may assign encoding information about a corresponding coded depth and an encoding mode to at least one of the coding unit, the prediction unit, and a minimum unit included in the largest coding unit.

The minimum unit according to an embodiment is a square data unit obtained by splitting the smallest coding unit constituting the lowermost coded depth by 4. Alternatively, the minimum unit according to an embodiment may be a maximum square data unit that may be included in all of the coding units, prediction units, partition units, and transformation units included in the largest coding unit.

For example, the encoding information output by the output unit 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction of an inter mode, about a reference image index of the inter mode, about a motion vector, about a chroma sample of an intra mode, and about an interpolation method of the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit permitted with respect to a current video, and information about a minimum size of the transformation unit may also be output through a header of a bitstream, a sequence parameter set, or a picture parameter set. The output unit 130 may encode and output an offset parameter related to the offset adjustment technique described above.

According to the simplest embodiment of the video encoding apparatus 100, the deeper coding unit may be a coding unit obtained by dividing a height or width of a coding unit of an upper depth, which is one layer above, by two. That is, when the size of the coding unit of the current depth is 2Nx2N, the size of the coding unit of the lower depth is NxN. Also, the coding unit with the current depth having a size of 2Nx2N may include a maximum of 4 of the coding units with the lower depth.

Accordingly, the video encoding apparatus 100 may form the coding units having the tree structure by determining coding units having an optimum shape and an optimum size for each largest coding unit, based on the size of the largest coding unit and the maximum depth determined considering characteristics of the current picture. Also, since encoding may be performed on each largest coding unit by using any one of various prediction modes and transformations, an optimum encoding mode may be determined considering characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus according to the embodiment, image compression efficiency may be increased since a coding unit is adjusted while considering characteristics of an image while increasing a maximum size of a coding unit while considering a size of the image.

The video encoding apparatus 100 of FIG. 12 may perform an operation of the video encoding apparatus 10 described with reference to FIG. 1A above.

The coding unit determiner 120 may perform operation of the offset operator 12 of the offset encoding apparatus 10. An offset type, offset values according to categories, and an offset class may be determined with respect to each LCU.

The outputter 130 may perform operation of the offset parameter encoder 16. Offset parameters determined with respect to each LCU may be output. Offset merge information indicating whether to adopt offset parameters of adjacent LCUs of a current LCU as current offset parameters may be initially output. As an offset type, an off type, an edge type, or a band type may be output. Offset values may be output in order of zero value information, sign information, and other offset values. With respect to the edge type, the sign information of the offset value may not be output.

When offset merge information of the current LCU allows to adopt the offset parameters of adjacent LCUs, an offset type and an offset value of the current LECT may not be output.

FIG. 13 is a block diagram of the video decoding apparatus based on coding units according to a tree structure, 200 according to an embodiment of the present disclosure.

The video decoding apparatus based on coding units according to tree structure 200 according to an embodiment includes a receiver 210, an image data and encoding information extractor 220, and an image data decoder 230. For convenience of description, the video decoding apparatus based on coding units according to tree structure 200 according to an embodiment will be abbreviated to the 'video decoding apparatus 200'.

Definitions of various terms, such as a coding unit, a depth, a prediction unit, a transformation unit, and various types of encoding mode information for decoding operations of the video decoding apparatus 200 according to the embodiment are identical to those described with reference to FIG. 12 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each largest coding unit, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts a coded depth and encoding mode information for the coding units having a tree structure according to each largest coding unit, from the parsed bitstream. The extracted coded depth and encoding mode information are output to the image data decoder 230. That is, the image data in a bit stream is split into the largest coding unit so that the image data decoder 230 decodes the image data for each largest coding unit.

A coded depth and encoding mode information according to the largest coding unit may be set for at least one piece of coded depth information, and the encoding mode information may include information about a partition type of a corresponding coding unit, about a prediction mode, and about size of a transformation unit Also, split information according to depths may be extracted as the information about the coded depth.

The coded depth and the encoding mode information according to each largest coding unit extracted by the image data and encoding information extractor 220 is a coded depth and encoding mode information determined to generate a minimum encoding error when an encoder, such as the video encoding apparatus 100 according to an embodiment, repeatedly performs encoding for each deeper coding unit according to depths according to each largest coding unit. Accordingly, the video decoding apparatus 200 may reconstruct an image by decoding the data according to the encoding mode that generates the minimum encoding error.

Since encoding information about the coded depth and the encoding mode may be assigned to a predetermined data unit from among a corresponding coding unit, a prediction unit, and a minimum unit, the image data and encoding information extractor 220 may extract the coded depth and the encoding mode information according to the predetermined data units. If the coded depth and the encoding mode information of a corresponding largest coding unit are recorded according to predetermined data units, the predetermined data units to which the same coded depth and the same encoding mode information are assigned may be inferred to be the data units included in the same largest coding unit.

The image data decoder 230 may reconstruct the current picture by decoding the image data in each largest coding unit based on the coded depth and the encoding mode information according to the largest coding units That is, the image data decoder 230 may decode the image data based on the read information about the partition type, the prediction mode, and the transformation unit for each coding unit from among the coding units having the tree structure included in each largest coding unit. A decoding process may include a prediction including intra prediction and motion compensation, and an inverse transformation.

The image data decoder 230 may perform intra prediction or motion compensation according to a partition and a prediction mode of each coding unit, based on the information about the partition mode and the prediction type of the prediction unit of the coding unit according to coded depths.

In addition, the image data decoder 230 may read information about a transformation unit according to a tree structure for each coding unit so as to perform inverse transformation based on transformation units for each coding unit, for inverse transformation for each largest coding unit. Via the inverse transformation, a pixel value of a spatial region of the coding unit may be reconstructed.

The image data decoder 230 may determine a coded depth of a current largest coding unit by using split information according to depths. If the split information indicates that image data is no longer split in the current depth, the current depth is a coded depth. Accordingly, the image data decoder 230 may decode encoded data in the current largest coding unit by using the information about the partition mode of the prediction unit, the prediction type, and the size of the transformation unit.

That is, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

Also, the video decoding apparatus 200 of FIG. 13 may perform an operation of the video decoding apparatus 20 described above with reference to FIG. 2A.

The image data and encoding information extractor 220 and the receiver 210 may perform an operation of the offset parameter extractor 22 of the video decoding apparatus 20. The image data decoder 230 may perform operations of the offset determiner 24 of the offset adjuster 26.

When the image data and encoding information extractor 220 parses only offset merge information without an offset parameter for a current LCU from bitstream, the image data and encoding information extractor 220 may reconstruct a current offset parameter in the same manner as at least one of adjacent offset parameters. A parameter that is to be referred to from among the adjacent offset parameters may be determined based on the offset merge information. If the image data and encoding information extractor 220 determines that the adjacent offset parameters and the current offset parameter are different based on the offset merge information for the current LCU parsed from the bitstream, the current offset parameter for the current LCU may be parsed and reconstructed from the bistream.

The image data and encoding information extractor 220 may parse an offset parameter for each LCU from the bitstream. An offset type, offset values according to categories, and an offset class may be determined from the offset parameter. When the offset type of the current LCU is an off type, an offset adjustment operation on the current LCU may end. When the offset type is an edge type, a current offset value may be selected from received offset values based on an edge class indicating an edge direction of each of reconstructed pixels and a category indicating an edge shape. When the offset type is a band type, a band of each of the reconstructed pixels may be determined, and an offset value corresponding to a current band may be selected from among the offset values.

The image data decoder 230 may generate a reconstructed pixel capable of minimizing an error between an original pixel and the reconstructed pixel, by adjusting a pixel value of the reconstructed pixel by a corresponding offset value. Offsets of reconstructed pixels of each LCU may be adjusted based on the parsed offset parameters.

Thus, the video decoding apparatus 200 may obtain information about at least one coding unit that generates the minimum encoding error when encoding is recursively performed for each largest coding unit, and may use the information to decode the current picture. In other words, the coding units having the tree structure determined to be the optimum coding units in each largest coding unit may be decoded.

Accordingly, even if an image has high resolution or has an excessively large data amount, the image may be efficiently decoded and reconstructed by using a size of a coding unit and an encoding mode, which are adaptively determined according to characteristics of the image, by using optimum encoding mode information received from an encoder.

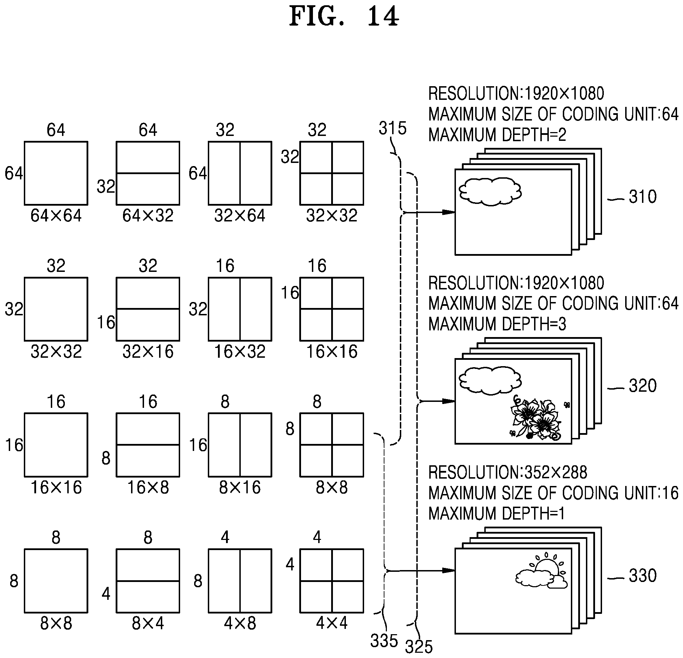

FIG. 14 is a diagram for describing a concept of coding units according to an embodiment of the present disclosure.

A size of a coding unit may be expressed by width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 14 denotes a total number of splits from a largest coding unit to a minimum coding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the vide data 310 may include a largest coding unit having a long axis size of 64, and coding units having long axis sizes of 32 and 16 since depths are deepened to two layers by splitting the largest coding unit twice. Since the maximum depth of the video data 330 is 1, coding units 335 of the video data 330 may include a largest coding unit having a long axis size of 16, and coding units having a long axis size of 8 since depths are deepened to one layer by splitting the largest coding unit once.

Since the maximum depth of the video data 320 is 3, coding units 325 of the video data 320 may include a largest coding unit having a long axis size of 64, and coding units having long axis sizes of 32, 16, and 8 since the depths are deepened to 3 layers by splitting the largest coding unit three times. As a depth deepens, detailed information may be precisely expressed.

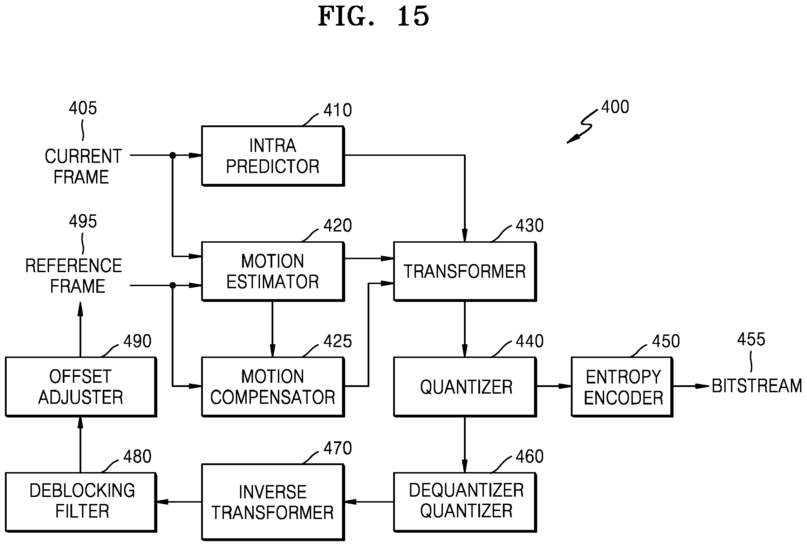

FIG. 15 is a block diagram of an image encoder 400 based on coding units, according to an embodiment of the present disclosure.

The image encoder 400 performs operations of the coding unit determiner 120 of the video encoding apparatus 100 to encode image data. In other words, an intra predictor 410 performs intra prediction on coding units in an intra mode, from among a current frame 405, and a motion estimator 420 and a motion compensator 425 respectively perform inter estimation and motion compensation on coding units in an inter mode from among the current frame 405 by using the current frame 405, and a reference frame 495.

Data output from the intra predictor 410, the motion estimator 420, and the motion compensator 425 is output as a quantized transformation coefficient through a transformer 430 and a quantizer 440. The quantized transformation coefficient is reconstructed as data in the space domain through an inverse quantizer 460 and an inverse transformer 470, and the reconstructed data in the space domain is output as the reference frame 495 after being post-processed through a deblocking filter 480 and an SAO operator 490. The quantized transformation coefficient may be output as a bitstream 455 through an entropy encoder 450.

In order for the image encoder 400 to be applied in the video encoding apparatus 100, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking filter 480, and the SAO operator 490 perform operations based on each coding unit among coding units having a tree structure while considering the maximum depth of each LCU.

In particular, the intra predictor 410, the motion estimator 420, and the motion compensator 425 determine partitions and a prediction mode of each coding unit from among the coding units having a tree structure while considering the maximum size and the maximum depth of a current LCU, and the transformer 430 determines the size of the transformation unit in each coding unit from among the coding units having a tree structure.

The image encoder 400 may classify pixels according to an edge type (or a band type) of each LCU of the reference frame 495, may determine an edge direction (or a start band position), and may determine an average error value of reconstructed pixels included in each category. With respect to each LCU, offset merge information, offset merge information, and an offset parameter may be encoded and signaled.

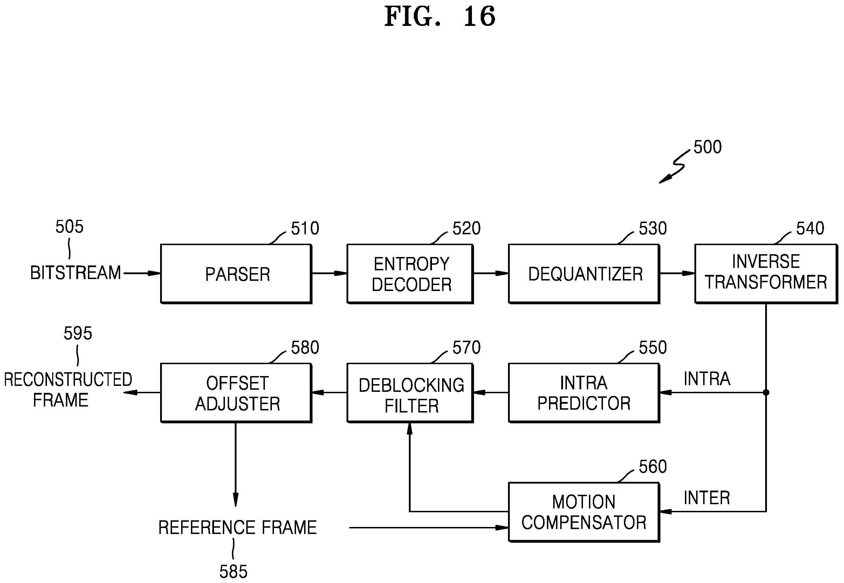

FIG. 16 is a block diagram of an image decoder 500 based on coding units, according to an embodiment of the present disclosure.

A parser 510 parses encoded image data to be decoded and information about encoding required for decoding from a bitstream 505. The encoded image data is output as inverse quantized data through an entropy decoder 520 and an inverse quantizer 530, and the inverse quantized data is reconstructed to image data in the space domain through an inverse transformer 540.

An intra predictor 550 performs intra prediction on coding units in an intra mode with respect to the image data in the space domain, and a motion compensator 560 performs motion compensation on coding units in an inter mode by using a reference frame 585.

The image data in the space domain, which passed through the intra predictor 550 and the motion compensator 560, may be output as a reconstructed frame 595 after being post-processed through a deblocking filter 570 and an SAO operator 580. Also, the image data that is post-processed through the deblocking filter 570 and the SAO operator 580 may be output as the reference frame 585.

In order to decode the image data in the image data decoder 230 of the video decoding apparatus 200, the image decoder 500 may perform operations that are performed after the parser 510.

In order for the image decoder 500 to be applied in the video decoding apparatus 200, all elements of the image decoder 500, i.e., the parser 510, the entropy decoder 520, the inverse quantizer 530, the inverse transformer 540, the intra predictor 550, the motion compensator 560, the deblocking filter 570, and the SAO operator 580 perform operations based on coding units having a tree structure for each LCU.

In particular, the intra prediction 550 and the motion compensator 560 perform operations based on partitions and a prediction mode for each of the coding units having a tree structure, and the inverse transformer 540 perform operations based on a size of a transformation unit for each coding unit.

The image decoder 500 may extract offset use information, offset merge information, and an offset parameter of each LCU from the bistream. A current offset parameter that is the same as offset parameters of adjacent LCUs may be reconstructed based on offset merge information of the current LCU. By using an offset type and offset values from among the offset parameters of the current LCU, each of reconstructed pixels of LCUs of the reconstructed frame 595 may be adjusted by an offset value corresponding to a category according to the edge type or the band type.

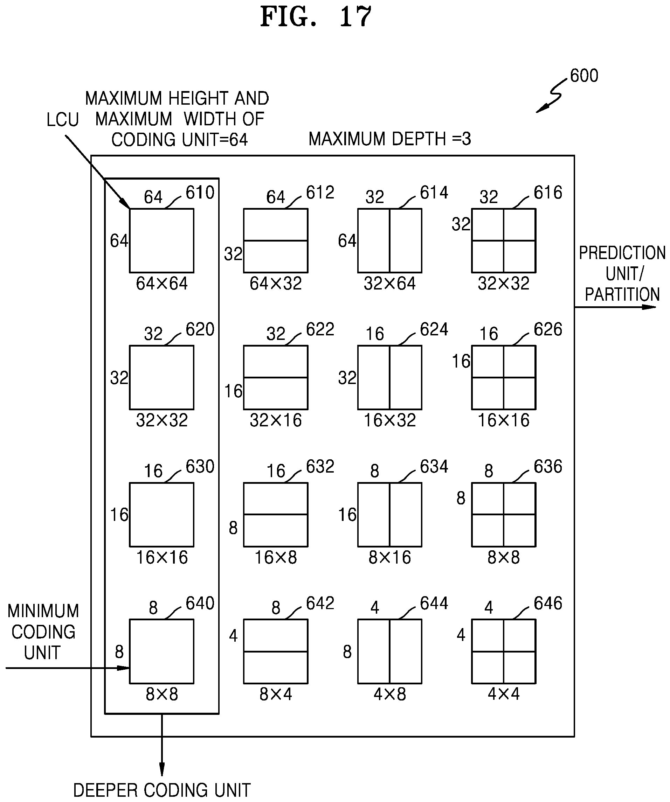

FIG. 17 is a diagram illustrating coding units according to depths and partitions, according to an embodiment of the present disclosure.

The video encoding apparatus 100 according to an embodiment and the video decoding apparatus 200 according to an embodiment use hierarchical coding units so as to consider characteristics of an image. A maximum height, a maximum width, and a maximum depth of coding units may be adaptively determined according to the characteristics of the image, or may be variously set according to user requirements. Sizes of deeper coding units according to depths may be determined according to the predetermined maximum size of the coding unit.

In a hierarchical structure of coding units 600 according to an embodiment, the maximum height and the maximum width of the coding units are each 64, and the maximum depth is 3. In this regard, the maximum depth refers to a total number of times the coding unit is split from the largest coding unit to the minimum coding unit. Since a depth deepens along a vertical axis of the hierarchical structure of coding units 600, a height and a width of the deeper coding unit are each split. Also, a prediction unit and partitions, which are bases for prediction encoding of each deeper coding unit, are shown along a horizontal axis of the hierarchical structure 600.

That is, a coding unit 610 is a largest coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3 are present. The coding unit 640 having a size of 4x4 and a depth of 3 is a minimum coding unit.

The prediction unit and the partitions of a coding unit are arranged along the horizontal axis according to each depth. In other words, if the coding unit 610 having a size of 64x64 and a depth of 0 is a prediction unit, the prediction unit may be split into partitions included in the coding unit 610 having a size of 64x64, i.e. a partition 610 having a size of 64x64, partitions 612 having the size of 64x32, partitions 614 having the size of 32x64, or partitions 616 having the size of 32x32.

Equally, a prediction unit of the coding unit 620 having the size of 32x32 and the depth of 1 may be split into partitions included in the coding unit 620 having a size of 32x32, i.e. a partition 620 having a size of 32x32, partitions 622 having a size of 32x16, partitions 624 having a size of 16x32, and partitions 626 having a size of 16x16.

Equally, a prediction unit of the coding unit 630 having the size of 16x16 and the depth of 2 may be split into partitions included in the coding unit 630 having a size of 16x16, i.e. a partition having a size of 16x16 included in the coding unit 630, partitions 632 having a size of 16x8, partitions 634 having a size of 8x16, and partitions 636 having a size of 8x8.

Equally, a prediction unit of the coding unit 640 having the size of 8x8 and the depth of 3 may be split into partitions included in the coding unit 640 having a size of 8x8, i.e. a partition 640 having a size of 8x8 included in the coding unit 640, partitions 642 having a size of 8x4, partitions 644 having a size of 4x8, and partitions 646 having a size of 4x4.

In order to determine the depth of the largest coding unit 610, the coding unit determiner 120 of the video encoding apparatus 100 according to various embodiments performs encoding for coding units corresponding to each depth included in the largest coding unit 610.

The number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a minimum encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the largest coding unit 610 may be selected as the depth and a partition mode of the largest coding unit 610.

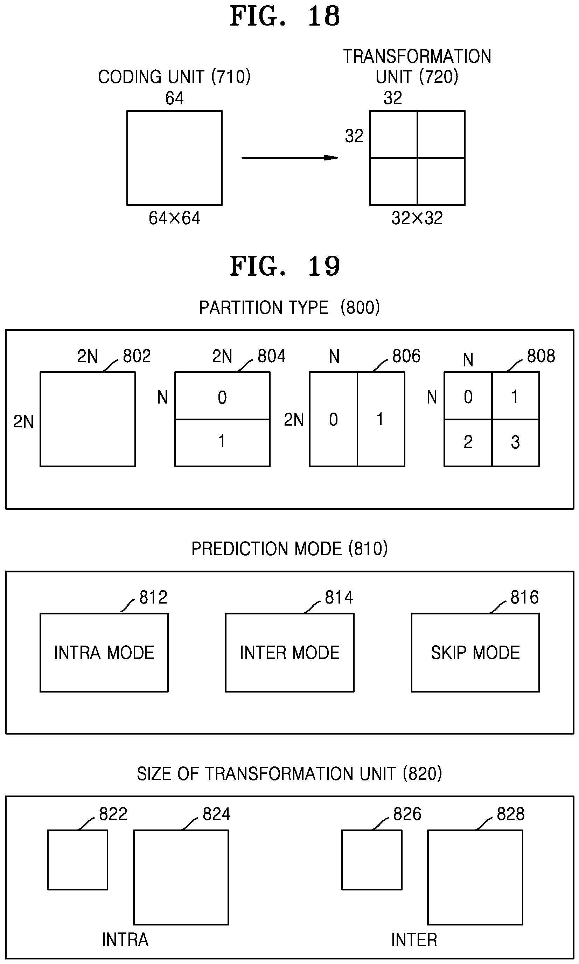

FIG. 18 is a diagram for describing a relationship between a coding unit and transformation units, according to an embodiment of the present disclosure.

The video encoding apparatus 100 according to an embodiment or the video decoding apparatus 200 according to an embodiment encodes or decodes an image according to coding units having sizes smaller than or equal to a largest coding unit for each largest coding unit. Sizes of transformation units for transformation during encoding may be selected based on data units that are not larger than a corresponding coding unit.

For example, in the video encoding apparatus 100 or the video decoding apparatus 200, when a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the minimum coding error may be selected.

FIG. 19 illustrates a plurality of pieces of encoding information according to an embodiment of the present disclosure.

The output unit 130 of the video encoding apparatus 100 according to an embodiment may encode and transmit information 800 about a partition type, information 810 about a prediction mode, and information 820 about a size of a transformation unit for each coding unit corresponding to a coded depth, as encoding mode information.

The information 800 indicates information about a type of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. In this case, the partition mode information 800 about a current coding unit is set to indicate one of the partition 802 having a size of 2Nx2N, the partition 804 having a size of 2NxN, the partition 806 having a size of Nx2N, and the partition 808 having a size of NxN.

The prediction mode information 810 indicates a prediction mode of each partition. For example, the prediction mode information 810 may indicate a mode of prediction encoding performed on a partition indicated by the partition mode information 800, i.e., an intra mode 812, an inter mode 814, or a skip mode 816.

The transformation unit size information 820 represents a transformation unit to be based on when transformation is performed on a current coding unit. For example, the transformation unit may be a first intra transformation unit 822, a second intra transformation unit 824, a first inter transformation unit 826, or a second intra transformation unit 828.

The image data and encoding information extractor 210 of the video decoding apparatus 200 according to an embodiment may extract and use the partition mode information 800, the prediction mode information 810, and the transformation unit size information 820 for decoding, according to each deeper coding unit.

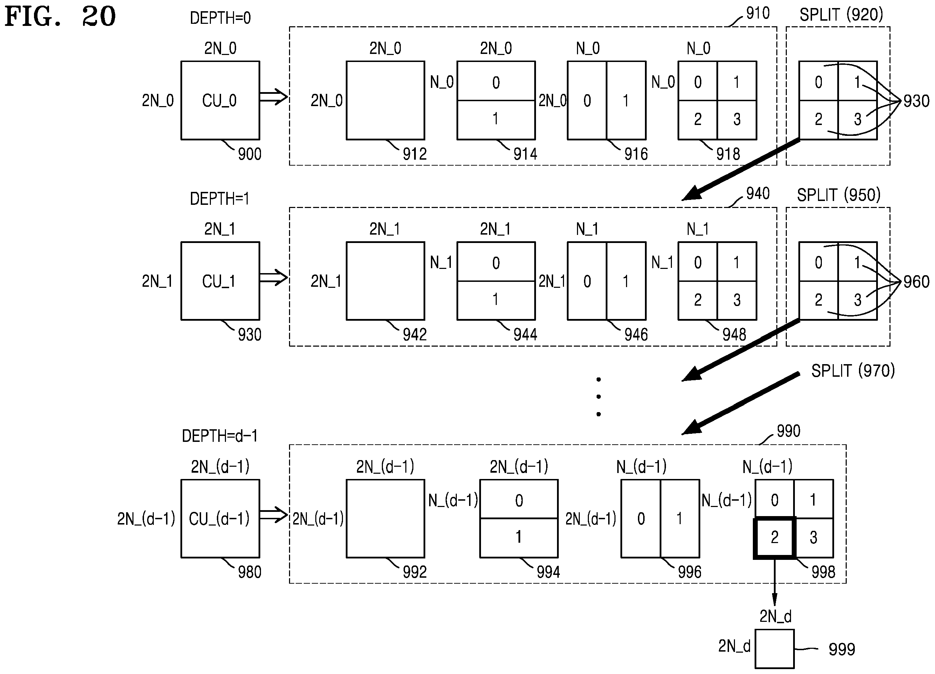

FIG. 20 is a diagram of deeper coding units according to depths, according to an embodiment of the present disclosure.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. Only the partition modes 912, 914, 916, and 918 which are obtained by symmetrically splitting the prediction unit are illustrated, but as described above, a partition mode is not limited thereto and may include asymmetrical partitions, partitions having a predetermined shape, and partitions having a geometrical shape.

According to each partition type, prediction encoding has to be repeatedly performed on one partition having a size of 2N_0x2N_0, two partitions having a size of 2N_0xN_0, two partitions having a size of N_0x2N_0, and four partitions having a size of N_0xN_0. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error is smallest in one of the partition types 912, 914, and 916 having the sizes of 2N_0x2N_0, 2N_0xN_0 and N_0x2N_0, the prediction unit 910 may not be split into a lower depth.

If the encoding error is the smallest in the partition type 918 having the size of N_0xN_0, a depth is changed from 0 to 1 and split is performed (operation 920), and encoding may be repeatedly performed on coding units 930 of a partition type having a depth of 2 and a size of N_0xN_0 so as to search for a minimum encoding error.

A prediction unit 940 for prediction encoding the coding unit 930 having a depth of 1 and a size of 2N_1x2N_1 (=N_0xN_0) may include a partition type 942 having a size of 2N_1x2N_1, a partition type 944 having a size of 2N_1xN_1, a partition type 946 having a size of N_1x2N_1, and a partition type 948 having a size of N_1xN_1.

If an encoding error is the smallest in the partition type 948 having the size of N_1xN_1, a depth is changed from 1 to 2 and split is performed (in operation 950), and encoding is repeatedly performed on coding units 960 having a depth of 2 and a size of N_2xN_2 so as to search for a minimum encoding error.

When a maximum depth is d, split operation according to each depth may be performed up to when a depth becomes d-1, and split information may be encoded as up to when a depth is one of 0 to d-2. That is, when encoding is performed up to when the depth is d-1 after a coding unit corresponding to a depth of d-2 is split (in operation 970), a prediction unit 990 for prediction encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types to search for a partition type having a minimum encoding error.

Even when the partition type 998 having the size of N_(d-1)xN_(d-1) has the minimum encoding error, since a maximum depth is d, a coding unit CU_(d-1) having a depth of d-1 is no longer split into a lower depth, and a coded depth for the coding units constituting a current largest coding unit 900 is determined to be d-1 and a partition type of the current largest coding unit 900 may be determined to be N_(d-1)xN_(d-1). Also, since the maximum depth is d, split information for a coding unit 952 having a depth of d-1 is not set.

A data unit 999 may be a 'minimum unit' for the current largest coding unit. A minimum unit according to the embodiment may be a square data unit obtained by splitting a smallest coding unit having a lowermost depth by 4. By performing the encoding repeatedly, the video encoding apparatus 100 according to the embodiment may select a depth having the minimum encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 0, 1, ..., d-1, d, and a depth having a minimum encoding error may be determined to be a coded depth. The coded depth, the partition type of the prediction unit, and the prediction mode may be encoded and transmitted as encoding mode information Also, since a coding unit is split from a depth of 0 to a coded depth, only split information of the coded depth is set to 0, and split information of depths excluding the coded depth is set to 1.

The image data and encoding information extractor 220 of the video decoding apparatus 200 according to the embodiment may extract and use a coded depth and prediction unit information about the coding unit 900 so as to decode the coding unit 912. The video decoding apparatus 200 according to the embodiment may determine a depth, in which split information is '0', as a coded depth by using split information according to depths, and may use, for decoding, encoding mode information about the corresponding depth.

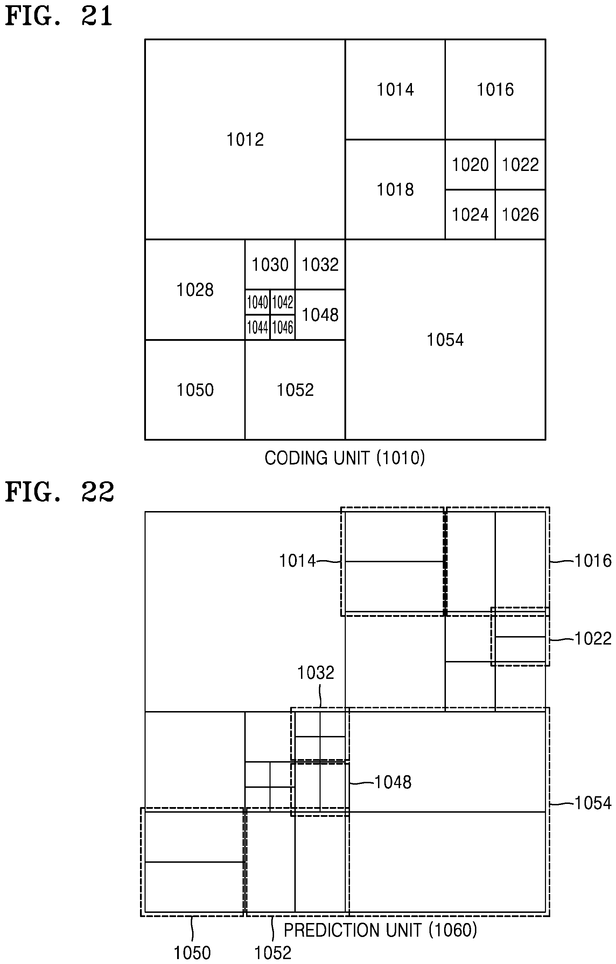

FIGS. 21, 22, and 23 are diagrams for describing a relationship between coding units, prediction units, and transformation units, according to an embodiment of the present disclosure.

Coding units 1010 are deeper coding units according to depths determined by the video encoding apparatus 100, in a largest coding unit. Prediction units 1060 are partitions of prediction units of each of the coding units 1010 according to coded depths, and transformation units 1070 are transformation units of each of the coding units according to coded depths.

When a depth of a largest coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some coding units 1014, 1016, 1022, 1032, 1048, 1050, 1052, and 1054 are obtained by splitting the coding unit. That is, partitions 1014, 1022, 1050, and 1054 are a partition mode having a size of 2NxN, partitions 1016, 1048, and 1052 are a partition mode having a size of Nx2N, and a partition 1032 is a partition mode having a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are data units different from those in the prediction units 1060 in terms of sizes and shapes. That is, the video encoding apparatus 100 and the video decoding apparatus 200 according to the embodiments may perform intra prediction / motion estimation / motion compensation / and transformation/inverse transformation on an individual data unit in the same coding unit.

Accordingly, encoding is recursively performed on each of coding units having a hierarchical structure in each region of a largest coding unit to determine an optimum coding unit, and thus coding units having a recursive tree structure may be obtained. Encoding information may include split information about a coding unit, partition type information, prediction mode information, and transformation unit size information. Table 1 below shows the encoding information that may be set by the video encoding apparatus 100 and the video decoding apparatus 200 according to the embodiments.

[Table 1]

| Split Information 0 (Encoding on Coding Unit having Size of 2Nx2N and Current Depth of d) | | | | Split Information 1 |
|---|---|---|---|---|
| Prediction Mode | Partition Type | | Size of Transf formation Unit | |
| | Symmetrical Partition Type | Asymmetrical Partition Type | Split Information 0 of Transformation Unit | Split Information 1 of Transformation Unit | Repeatedly Encode Coding Units having Lower Depth of d+1 |
| Intra  Inter  Skip (Only 2Nx2N) | 2Nx2N  2NxN  Nx2N  NxN | 2NxnU  2NxnD  nLx2N  nRx2N | 2Nx2N | NxN (Symmetrical Partition Type)  N/2xN/2 (Asymmetrical Partition Type) | Repeatedly Encode Coding Units having Lower Depth of d+1 |

Accordingly The output unit 130 of the video encoding apparatus 100 according to the embodiment may output the encoding information about the coding units having a tree structure, and the image data and encoding information extractor 220 of the video decoding apparatus 200 according to the embodiment may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus partition type information, prediction mode information, and transformation unit size information may be defined for the coded depth. If the current coding unit has to be further split according to the split information, encoding has to be independently performed on four split coding units of a lower depth.

A prediction mode may be one of an intra mode, an inter mode, and a skip mode. The intra mode and the inter mode may be defined in all partition modes, and the skip mode is defined only in a partition mode having a size of 2Nx2N.

The partition type information may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1.

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units having a tree structure according to the embodiment may be assigned to at least one of a coding unit corresponding to a coded depth, a prediction unit, and a minimum unit. The coding unit corresponding to the coded depth may include at least one of a prediction unit and a minimum unit containing the same encoding information.

Accordingly, it is determined whether adjacent data units are included in the same coding unit corresponding to the coded depth by comparing encoding information of the adjacent data units. Also, a coding unit corresponding to a coded depth is determined by using encoding information of a data unit, and thus a distribution of coded depths in a largest coding unit may be inferred.

Accordingly, if a current coding unit is predicted based on adjacent data units, encoding information of data units in deeper coding units adjacent to the current coding unit may be directly referred to and used.

Alternatively, if a current coding unit is prediction-encoded based on adjacent coding units, data units adjacent to the current coding unit are searched by using encoding information of adjacent deeper coding units, and the searched adjacent coding units may be referred.

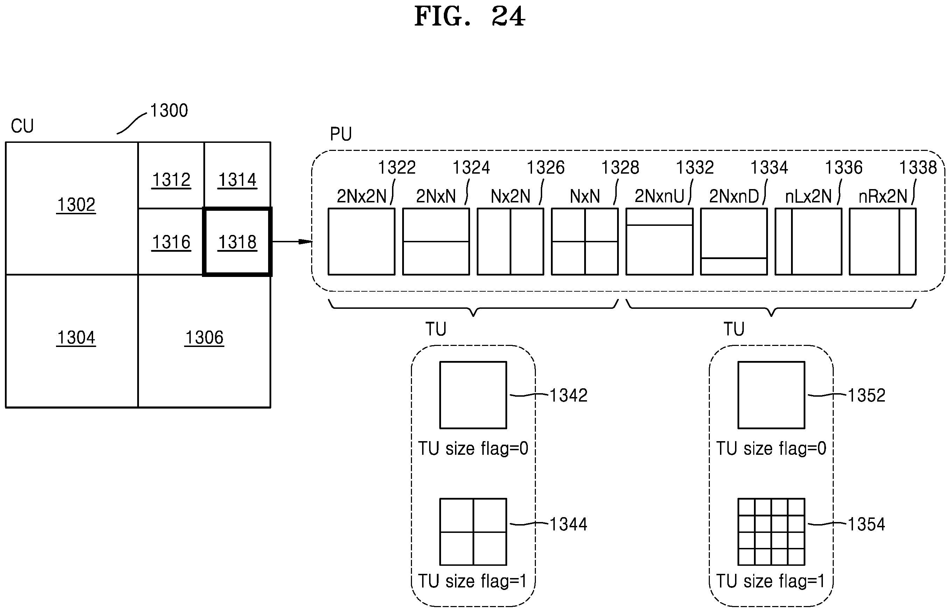

FIG. 24 is a diagram for describing a relationship between a coding unit, a prediction unit, and a transformation unit according to encoding mode information of Table 1.

A largest coding unit 1300 includes coding units 1302, 1304, 1306, 1312, 1314, 1316, and 1318 of coded depths. Here, since the coding unit 1318 is a coding unit of a depth, split information may be set to 0. Partition type information of the coding unit 1318 having a size of 2Nx2N may be set to be one of partition modes including 2Nx2N 1322, 2NxN 1324, Nx2N 1326, NxN 1328, 2NxnU 1332, 2NxnD 1334, nLx2N 1336, and nRx2N 1338.

Transformation unit split information (TU size flag) is a type of a transformation index, and a size of a transformation unit corresponding to the transformation index may be changed according to a prediction unit type or partition type of the coding unit.

For example, when the partition type information is set to be one of symmetrical partition modes 2Nx2N 1322, 2NxN 1324, Nx2N 1326, and NxN 1328, if the transformation unit split information is 0, a transformation unit 1342 having a size of 2Nx2N is set, and if the transformation unit split information is 1, a transformation unit 1344 having a size of NxN may be set.

When the partition type information is set to be one of asymmetrical partition types 2NxnU 1332, 2NxnD 1334, nLx2N 1336, and nRx2N 1338, if the transformation unit split information (TU size flag) is 0, a transformation unit 1352 having a size of 2Nx2N may be set, and if the transformation unit split information is 1, a transformation unit 1354 having a size of N/2xN/2 may be set.

The transformation unit split information (TU size flag) described above with reference to FIG. 24 is a flag having a value of 0 or 1, but the transformation unit split information according to an embodiment is not limited to a flag having 1 bit, and the transformation unit may be hierarchically split while the transformation unit split information increases in a manner of 0, 1, 2, 3.. etc., according to setting. Split information (TU size flag) of a transformation unit may be an example of a transformation index.

In this case, the size of a transformation unit that has been actually used may be expressed by using the transformation unit split information according to the embodiment, together with a maximum size of the transformation unit and a minimum size of the transformation unit. The video encoding apparatus 100 according to the embodiment may encode maximum transformation unit size information, minimum transformation unit size information, and maximum transformation unit split information. The result of encoding the maximum transformation unit size information, the minimum transformation unit size information, and the maximum TU size flag may be inserted into an SPS. The video decoding apparatus 200 according to the embodiment may decode video by using the maximum transformation unit size information, the minimum transformation unit size information, and the maximum transformation unit split information.

For example, (a) if the size of a current coding unit is 64x64 and a maximum transformation unit size is 32x32, (a-1) then the size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be less than 32x32

As another example, (c) if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

CurrMinTuSize

= max (MinTransformSize,

RootTuSize/(2^MaxTransformSizeIndex)) ... (1)

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

The maximum transformation unit size RootTuSize according to an embodiment may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

RootTuSize = min(MaxTransformSize, PUSize) ......... (2)

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

RootTuSize = min(MaxTransformSize, PartitionSize) ...........(3)

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an embodiment, and a factor for determining the current maximum transformation unit size is not limited thereto.

According to the video encoding method based on coding units of a tree structure described above with reference to FIGS. 12 through 24, image data of a spatial domain is encoded in each of the coding units of the tree structure, and the image data of the spatial domain is reconstructed in a manner that decoding is performed on each largest coding unit according to the video decoding method based on the coding units of the tree structure, so that a video that is formed of pictures and picture sequences may be reconstructed. The reconstructed video may be reproduced by a reproducing apparatus, stored in a storage medium, or transmitted through a network.

Also, SAO parameters may be signaled with respect to each picture, each slice, each LCU, each of coding units having a tree structure, each prediction unit of the coding units, or each transformation unit of the coding units. For example, pixel values of reconstructed pixels of each LCU may be adjusted by using offset values reconstructed based on received SAO parameters, and thus an LCU having a minimized error between an original block and the LCU may be reconstructed.

The embodiments according to the present disclosure may be written as computer programs and may be implemented in general-use digital computers that execute the programs using a non-transitory computer-readable recording medium. Examples of the non-transitory computer-readable recording medium include magnetic storage media (e.g., ROM, floppy discs, hard discs, etc.) and optical recording media (e.g., CD-ROMs, or DVDs).

While the present disclosure has been particularly shown and described with reference to embodiments thereof, it will be understood by one of ordinary skill in the art that various changes in form and details may be made therein without departing from the spirit and scope of the following claims. The embodiments should be considered in a descriptive sense only and not for purposes of limitation. Therefore, the scope of the disclosure is defined not by the detailed description of the disclosure but by the appended claims, and all differences within the scope will be construed as being included in the present disclosure.

For convenience of description, the video encoding method according to operation of a sample offset, which is described above with reference to FIGS. 1A through 24, will be referred to as a 'video encoding method according to the present disclosure'. In addition, the video decoding method according to operation of a sample offset, which is described above with reference to FIGS. 1A through 20, will be referred to as a 'video decoding method according to the present disclosure'.

Also, a video encoding apparatus including the SAO encoding apparatus 10, the video encoding apparatus 100, or the image encoder 400, which is described above with reference to FIGS. 1A through 24, will be referred to as a 'video encoding apparatus according to the present disclosure'. In addition, a video decoding apparatus including the video decoding apparatus 20, the video decoding apparatus 200, or the image decoder 500, which is described above with reference to FIGS. 2A through 24, will be referred to as a 'video decoding apparatus according to the present disclosure'.

A non-transitory computer-readable recording medium such as a disc 26000 that stores the programs according to an embodiment will now be described in detail.

FIG. 20 illustrates a physical structure of the disc 26000 in which a program is stored, according to an embodiment. The disc 26000, which is a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000, a program that executes the quantized parameter determining method, the video encoding method, and the video decoding method described above may be assigned and stored.

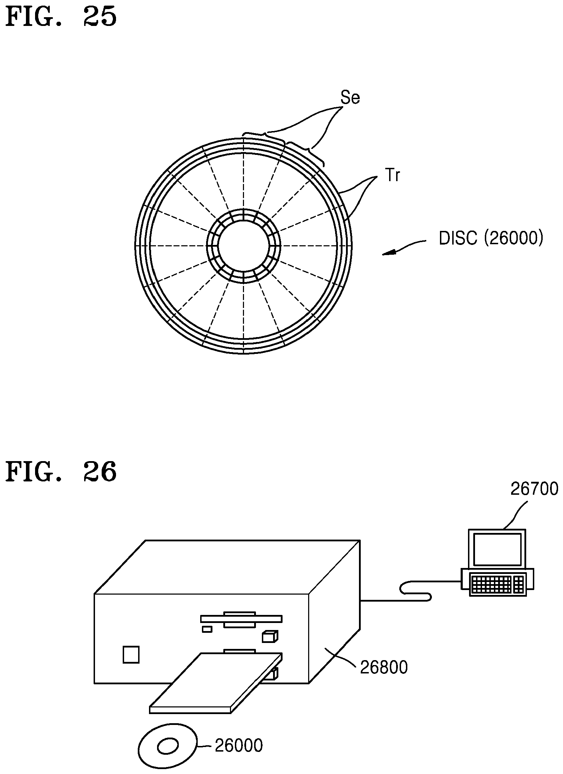

A computer system embodied using a storage medium that stores a program for executing the video encoding method and the video decoding method as described above will now be described with reference to FIG. 26.

FIG. 26 illustrates a disc drive 26800 for recording and reading a program by using the disc 26000. A computer system 27000 may store a program that executes at least one of a video encoding method and a video decoding method of the present disclosure, in the disc 26000 via the disc drive 26800. To run the program stored in the disc 26000 in the computer system 26700, the program may be read from the disc 26000 and be transmitted to the computer system 26700 by using the disc drive 27000.

The program that executes at least one of the video encoding method and the video decoding method of the present disclosure may be stored not only in the disc 26000 illustrated in FIGS. 25 and 26 but may also be stored in a memory card, a ROM cassette, or a solid state drive (SSD).

A system to which the video encoding method and a video decoding method described above are applied will be described below.

FIG. 22 illustrates an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

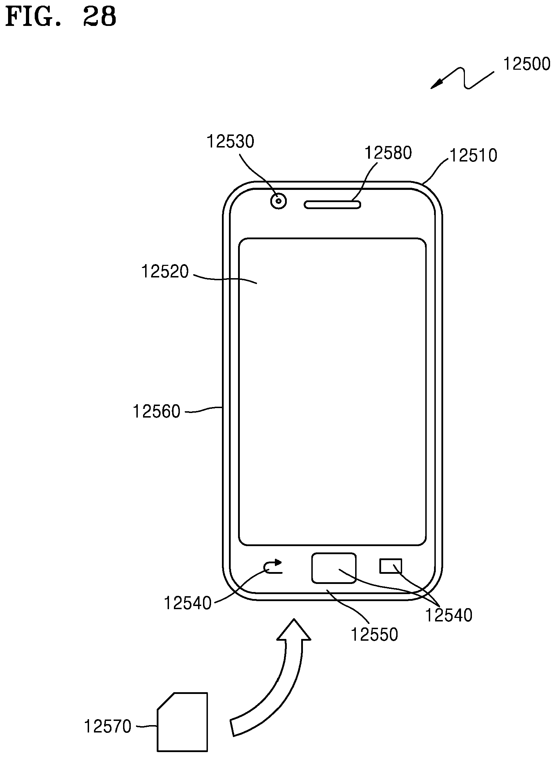

However, the content supply system 11000 is not limited to the configuration illustrated in FIG. 28, and the devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded by the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 such as a digital camera is an imaging device capable of capturing both still images and video images. The video data captured by the camera 12600 may be encoded using the camera 12600 or the computer 12100. Software that performs encoding and decoding video may be stored in a non-transitory computer-readable recording medium, e.g., a CD-ROM disc, a floppy disc, a hard disc drive, an SSD, or a memory card, which may be accessed by the computer 12100.

If video data is captured by a camera built in the mobile phone 12500, the video data may be received from the mobile phone 12500.

The video data may also be encoded by a large scale integrated circuit (LSI) system installed in the video camera 12300, the mobile phone 12500, or the camera 12600.

The content supply system 11000 may encode content data recorded by a user using the video camera 12300, the camera 12600, the mobile phone 12500, or another imaging device, e.g., content recorded during a concert, and may transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and to decode and reproduce the encoded content data in real-time, thereby enabling personal broadcasting.

The video encoding apparatus and the video decoding apparatus of the present disclosure may be applied to encoding and decoding operations of the plurality of independent devices included in the content supply system 11000.

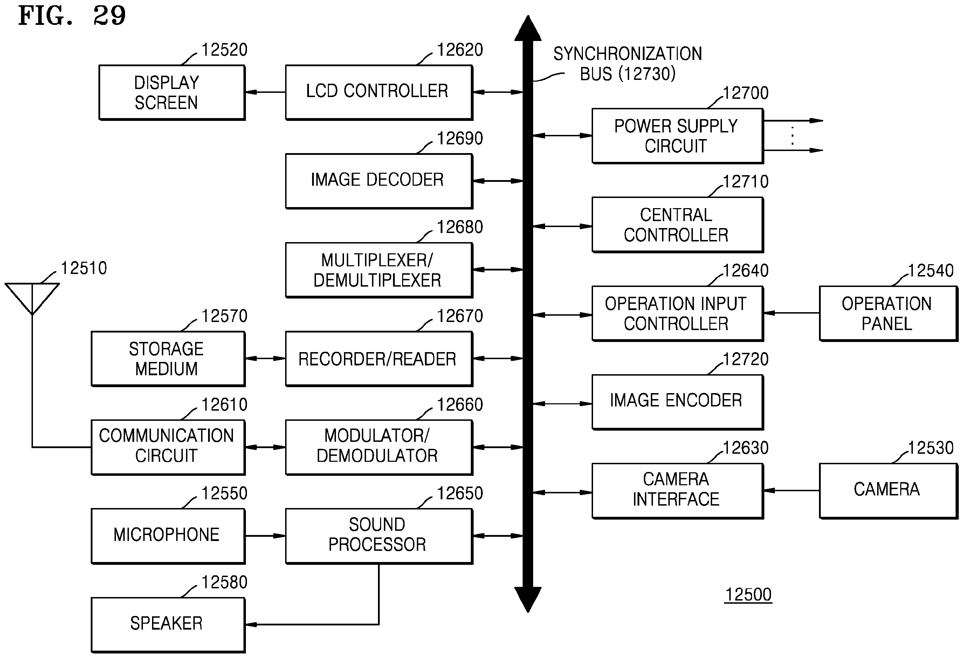

With reference to FIGS. 28 and 29, the mobile phone 12500 included in the content supply system 11000 according to an embodiment will now be described in detail.

FIG. 28 illustrates an external structure of the mobile phone 12500 to which the video encoding method and the video decoding method are applied, according to an embodiment. The mobile phone 12500 may be a smart phone, the functions of which are not limited and a large number of the functions of which may be changed or expanded.

The mobile phone 12500 includes an internal antenna 12510 via which a radio-frequency (RF) signal may be exchanged with the wireless base station 12000 of FIG. 21, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of sound output unit, and a microphone 12550 for inputting voice and sound or another type sound input unit. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 29 illustrates an internal structure of the mobile phone 12500. In order to systemically control parts of the mobile phone 12500 including the display screen 12520 and the operation panel 12540, a power supply circuit 12700, an operation input controller 12640, an image encoder 12720, a camera interface 12630, an LCD controller 12620, an image decoder 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off state to a 'power on' state, the power supply circuit 12700 supplies power to all the parts of the mobile phone 12500 from a battery pack, thereby setting the mobile phone 12500 in an operation mode.

The central controller 12710 includes a central processing unit (CPU), a ROM, and a RAM.

While the mobile phone 12500 transmits communication data to the outside, a digital signal is generated by the mobile phone 12500 by the control of the central controller 12710. For example, the sound processor 12650 may generate a digital sound signal, the image encoder 12720 may generate a digital image signal, and text data of a message may be generated via the operation panel 12540 and the operation input controller 12640. When a digital signal is transmitted to the modulation/demodulation unit 12660 by the control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is converted to a digital sound signal by the sound processor 12650 by the control of the central controller 12710. The generated digital sound signal may be converted to a transmission signal through the modulation/demodulation unit 12660 and the communication circuit 12610, and may be transmitted via the antenna 12510.

When a text message, e.g., email, is transmitted in a data communication mode, text data of the text message is input via the operation panel 12540 and is transmitted to the central controller 12610 via the operation input controller 12640. By the control of the central controller 12610, the text data is transformed into a transmission signal via the modulation/demodulation unit 12660 and the communication circuit 12610 and is transmitted to the wireless base station 12000 via the antenna 12510.

In order to transmit image data during the data communication mode, image data captured by the camera 12530 is provided to the image encoder 12720 via the camera interface 12630. The image data captured by the camera 12530 may be directly displayed on the display screen 12520 via the camera interface 12630 and the LCD controller 12620.

A structure of the image encoder 12720 may correspond to that of the video encoding apparatus 100 described above. The image encoder 12720 may convert the image data received from the camera 12530 to compressed and encoded image data according to the video encoding method described above, and then output the encoded image data to the multiplexer/demultiplexer 12680. During a recording operation of the camera 12530, a sound signal obtained by using the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoder 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from the outside, frequency recovery and analog-to-digital conversion (ADC) are performed on a signal received via the antenna 12510 to transform the signal into a digital signal. The modulation/demodulation unit 12660 modulates a frequency band of the digital signal. The frequency-band modulated digital signal is transmitted to the video decoding unit 12690, the sound processor 12650, or the LCD controller 12620, according to the type of the digital signal.

During the conversation mode, the mobile phone 12500 amplifies a signal received via the antenna 12510, and obtains a digital sound signal by performing frequency conversion and ADC on the amplified signal. A received digital sound signal is converted to an analog sound signal via the modulation/demodulation unit 12660 and the sound processor 12650, and the analog sound signal is output via the speaker 12580 by the control of the central controller 12710.

When during the data communication mode, data of a video file accessed at an Internet website is received, a signal received from the wireless base station 12000 via the antenna 12510 is output as multiplexed data via the modulation/demodulation unit 12660, and the multiplexed data is transmitted to the multiplexer/demultiplexer 12680.

In order to decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoder 12690 and the sound processor 12650, respectively.

A structure of the image decoder 12690 may correspond to that of the video decoding apparatus 200 described above. The image decoder 12690 may decode the encoded video data so as to generate reconstructed video data, by using the aforementioned video decoding method of the present disclosure, and then may provide the reconstructed video data to the display screen 12520 via the LCD controller 12620.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both the video encoding apparatus and the video decoding apparatus of the present disclosure, may be a transceiving terminal including only the video encoding apparatus of the present disclosure, or may be a transceiving terminal including only the video decoding apparatus of the present disclosure.

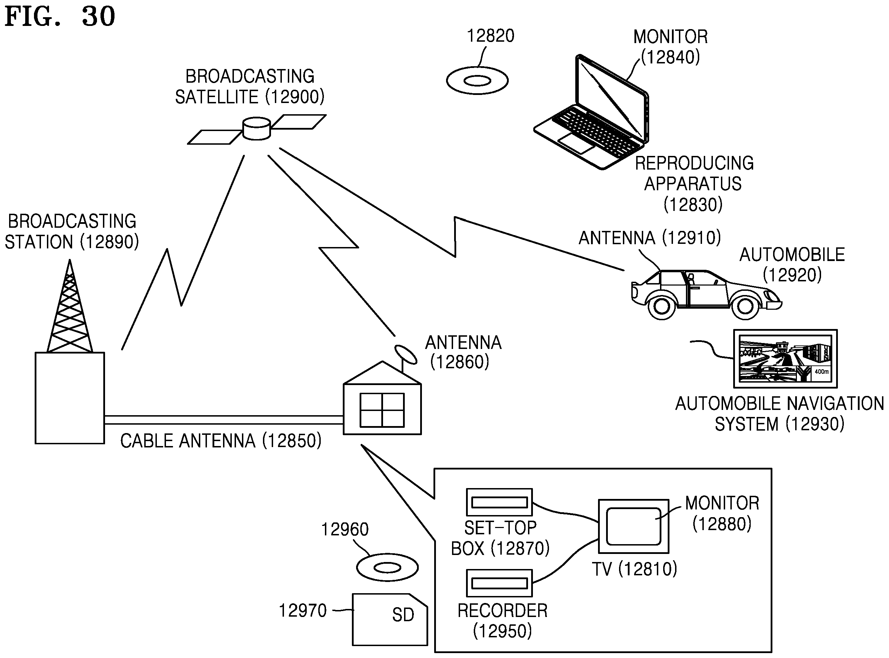

A communication system according to the present disclosure is not limited to the communication system described above with reference to FIG. 28. For example, FIG. 30 illustrates a digital broadcasting system employing a communication system, according to an embodiment. The digital broadcasting system of FIG. 30 may receive a digital broadcast transmitted via a satellite or a terrestrial network by using the video encoding apparatus and the video decoding apparatus of the present disclosure.

In more detail, a broadcasting station 12890 transmits a video data stream to a communication satellite or a broadcasting satellite 12900 by using radio waves. The broadcasting satellite 12200 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When the video decoding apparatus of the present disclosure is implemented in a reproducing apparatus 12830, the reproducing apparatus 12830 may parse and decode an encoded video stream recorded on a storage medium 12820, such as a disc or a memory card to reconstruct digital signals. Thus, the reconstructed video signal may be reproduced, for example, on a monitor 12840.

EP 3 203 738 A1

In the set-top box 12870 connected to the antenna 12860 for a satellite/terrestrial broadcast or a cable antenna 12850 for receiving a cable television (TV) broadcast, the video decoding apparatus of the present disclosure may be installed. Data output from the set-top box 12870 may also be reproduced on a TV monitor 12880.

As another example, the video decoding apparatus of the present disclosure may be installed in the TV receiver 12810 instead of the set-top box 12870.

An automobile 12920 that has an appropriate antenna 12910 may receive a signal transmitted from the satellite 12900 or the wireless base station 11700. A decoded video may be reproduced on a display screen of an automobile navigation system 12930 installed in the automobile 12920.

A video signal may be encoded by the video encoding apparatus of the present disclosure and may then be recorded to and stored in a storage medium. In more detail, an image signal may be stored in a DVD disc 12960 by a DVD recorder or may be stored in a hard disc by a hard disc recorder 12950. As another example, the video signal may be stored in an SD card 12970. If the hard disc recorder 12950 includes the video decoding apparatus according to the embodiment, a video signal recorded on the DVD disc 12960, the SD card 12970, or another storage medium may be reproduced on the TV monitor 12880.

The automobile navigation system 12930 may not include the camera 12530, the camera interface 12630, and the image encoder 12720 of FIG. 30. For example, the computer 12100 and the TV receiver 12810 may not include the camera 12530, the camera interface 12630, and the image encoder 12720 of FIG. 30.

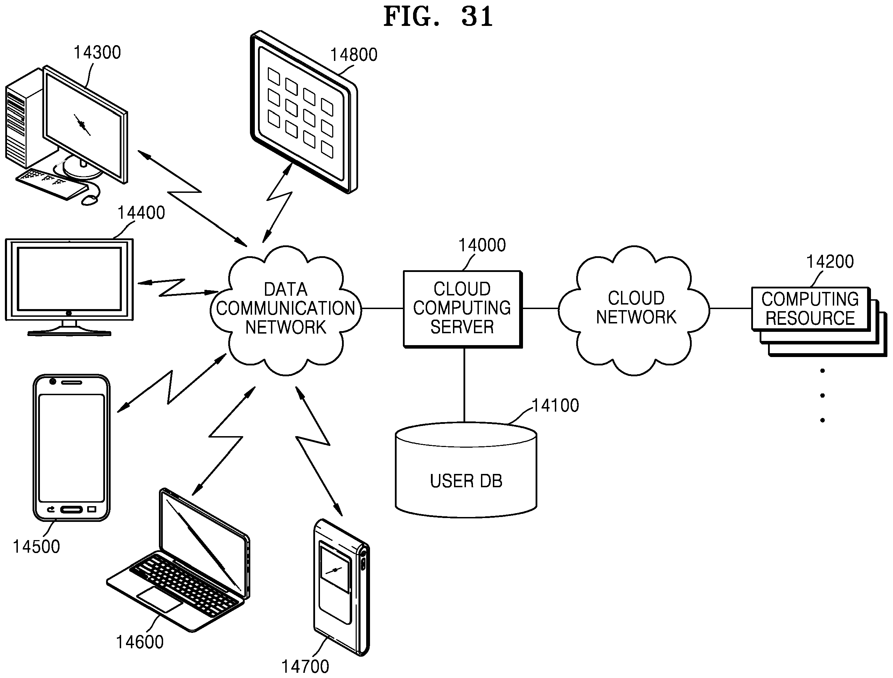

FIG. 31 illustrates a network structure of a cloud computing system using the video encoding apparatus and the video decoding apparatus, according to an embodiment of the present disclosure.

The cloud computing system may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce this video service is received from the smart phone 14500, the cloud computing server 14000 searches for and reproduces this video service, based on the user DB 14100. When the smart phone 14500 receives a video data stream from the cloud computing server 14000, a process of reproducing video by decoding the video data stream is similar to an operation of the mobile phone 12500 described above with reference to FIG. 28.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. If the user terminal requests to reproduce the video, starting from the pausing point thereof, the cloud computing server 14000 transmits streaming data of the video starting from a frame corresponding to the pausing point, to the user terminal.

Here, the user terminal may include the video decoding apparatus of the present disclosure as described above with reference to FIGS. 1A through 24. As another example, the user terminal may include the video encoding apparatus of the present disclosure as described above with reference to FIGS. 1A through 24. Alternatively, the user terminal may include both the video decoding apparatus and the video encoding apparatus of the present disclosure as described above with reference to FIGS. 1A through 24.

Various applications of the video encoding method, the video decoding method, the video encoding apparatus, and the video decoding apparatus of the present disclosure described above with reference to FIGS. 1A through 24 are described above with reference to FIGS. 25 through 31. However, embodiments with respect to methods of storing the video encoding method and the video decoding method in a storage medium or methods of implementing the video encoding apparatus and the video decoding apparatus in a device described above with reference to FIGS. 1A through 24 are not limited to the embodiments described above with reference to FIGS. 25 through 31.

While the present disclosure has been particularly shown and described with reference to embodiments thereof, it will be understood by one of ordinary skill in the art that various changes in form and details may be made therein without departing from the spirit and scope of the following claims. Therefore, the scope of the present disclosure is defined not by the detailed description of the present disclosure but by the appended claims, Therefore, the scope of the disclosure is defined not by the detailed description of the disclosure but by the appended claims, and all differences within the scope will be construed as being included in the present disclosure.

**Claims**

1. A video decoding method comprising:

   when a first offset method is applied to a current slice comprising a current block, adjusting an offset with respect to the current block, based on a first offset parameter of the current block;
   when the first offset method is applied to the current slice, determining whether to apply a second offset method to the current slice;
   when the second offset method is applied to the current slice, determining a second offset parameter of the current block; and
   applying an offset based on the second offset parameter to the current block to which the offset based on the first offset parameter is applied,
   wherein the first offset parameter and the second offset parameter comprise offset values for the current block.

2. The video decoding method of claim 1, wherein the determining of whether to apply the second offset method to the current slice comprises: determining whether to apply the second offset method to the current slice based on a second offset use information about the current slice obtained from a bitstream.

3. The video decoding method of claim 1, wherein the determining of whether to adjust the second offset method to the current slice comprises: determining whether to apply the second offset method to the current slice in the same manner as whether to apply the first offset method to the current slice.

4. The video decoding method of claim 1, wherein the first offset parameter and the second offset parameter of the current block comprise at least one of offset use information about the current block, an offset type, an offset class, and offset values.

5. The video decoding method of claim 1, wherein the determining of the second offset parameter of the current block comprises: determining the second offset parameter of the current block based on the first offset parameter of the current block.

6. The video decoding method of claim 1, further comprising: determining whether to apply the first offset method to the current block by obtaining first offset use information about the current block from a bitstream.

7. The video decoding method of claim 6, wherein the determining of the second offset parameter of the current block comprises: when the first offset use information about the current block indicates that the first offset method is applied to the current block, obtaining second offset use information about the current block from a bitstream.

8. The video decoding method of claim 1, wherein an offset type of the second offset method of the current block is differently determined from an offset type of the first offset method of the current block.

9. The video decoding method of claim 1, wherein the first offset parameter and the second offset parameter of the current block comprise information simultaneously indicating an offset type and an offset class of the current block.

10. The video decoding method of claim 1, further comprising:

obtaining first offset merge information and second offset merge information respectively indicating whether to use first offset parameters and second offset parameters of adjacent blocks of the current block to determine the first offset parameter and the second offset parameter of the current block;
determining the first offset parameter of the current block based on the first offset parameters of the adjacent blocks according to the first offset merge information; and
determining the second offset parameter of the current block based on the second offset parameters of the adjacent blocks according to the second offset merge information.

11. A video encoding method comprising:

when a first offset method is applied to a current slice comprising a current block, adjusting an offset with respect to the current block based on a first offset parameter of the current block;
when the first offset method is applied to the current slice, determining whether to apply a second offset method to the current slice;
when the second offset method is applied to the current slice, determining a second offset parameter of the current block; and
generating a bitstream comprising first offset use information indicating whether to apply the first offset method to the current slice, second offset use information indicating whether to apply the second offset method to the current slice, and the first offset parameter and the second offset parameter comprising offset values of the current block.

12. The video encoding method of claim 11, wherein the determining of whether to apply the second offset method to the current slice comprises: determining whether to apply the second offset method to the current slice based on whether to apply the second offset method to blocks included in a previous slice of the current slice.

13. The video encoding method of claim 11, wherein the determining of whether to adjust the second offset method to the current slice comprises: determining whether to apply the second offset method to the current slice in the same manner as whether to apply the first offset method to the current slice.

14. The video encoding method of claim 11, wherein the first offset parameter and the second offset parameter of the current block comprise at least one of offset use information about the current block, an offset type, an offset class, and offset values.

15. The video encoding method of claim 11, wherein the determining of the second offset parameter of the current block comprises: determining the second offset parameter of the current block based on the first offset parameter of the current block.

16. The video encoding method of claim 11, wherein the determining of the second offset parameter of the current block comprises: when the second offset method is applied to the current slice, determining second offset use information about the current block.

17. The video encoding method of claim 11, wherein the determining of the second offset parameter of the current block comprises: when the first offset method is applied to the current block, determining second offset use information about the current block.

18. The video encoding method of claim 11, wherein an offset type of the second offset method of the current block is differently determined from an offset type of the first offset method of the current block.

19. The video encoding method of claim 11, wherein the first offset parameter and the second offset parameter of the current block comprise information simultaneously indicating an offset type and an offset class of the current block.

**20.** A video decoding apparatus comprising:

a first offset method decoder, when a first offset method is applied to a current slice comprising a current block, configured to adjust an offset with respect to the current block based on a first offset parameter of the current block; and

a second offset method decoder, when the first offset method is applied to the current slice, configured to determine whether to apply a second offset method to the current slice, when the second offset method is applied to the current slice, determine a second offset parameter of the current block, and adjust an offset based on the second offset parameter with respect to the current block with respect to which the offset based on the first offset parameter is adjusted,

wherein the first offset parameter and the second offset parameter comprise offset values of the current block.

**21.** A video encoding apparatus comprising:

a first offset method encoder, when a first offset method is applied to a current slice comprising a current block, configured to adjust an offset with respect to the current block based on a first offset parameter of the current block;

a second offset method encoder, when the first offset method is applied to the current slice, configured to determine whether to adjust a second offset method to the current slice, and when the second offset method is applied to the current slice, determine a second offset parameter of the current block; and

a bitstream generator configured to generate a bitstream comprising first offset use information indicating whether to apply the first offset method to the current slice, second offset use information indicating whether to apply the second offset method to the current slice, and the first offset parameter and the second offset parameter comprising offset values of the current block.

# FIG. 1A

10

| 12 | 14 | 16 |
|---|---|---|
| FIRST OFFSET METHOD ENCODER | SECOND OFFSET METHOD ENCODER | BITSTREAM GENERATOR |

# FIG. 1B

```
                        ┌─────────┐
                        │  START  │
                        └────┬────┘
                             │
                             ▼
┌───────────────────────────────────────────────────┐
│      WHEN FIRST OFFSET METHOD IS APPLIED TO         │
│     CURRENT SLICE COMPRISING CURRENT BLOCK,         │
│   ADJUST OFFSET WITH RESPECT TO CURRENT BLOCK       │──11
│        BASED ON FIRST OFFSET PARAMETER OF           │
│           CURRENT BLOCK TO CURRENT BLOCK            │
└────────────────────────┬────────────────────────────┘
                         ▼
┌───────────────────────────────────────────────────┐
│       WHEN FIRST OFFSET METHOD IS APPLIED TO        │
│   CURRENT SLICE, DETERMINE WHETHER TO APPLY         │──13
│    SECOND OFFSET METHOD TO CURRENT SLICE            │
└────────────────────────┬────────────────────────────┘
                         ▼
┌───────────────────────────────────────────────────┐
│      WHEN SECOND OFFSET METHOD IS APPLIED TO        │
│     CURRENT SLICE, DETERMINE SECOND OFFSET          │──15
│          PARAMETER OF CURRENT BLOCK                 │
└────────────────────────┬────────────────────────────┘
                         ▼
┌───────────────────────────────────────────────────┐
│  GENERATE BITSTREAM COMPRISING FIRST OFFSET USE     │
│   INFORMATION INDICATING WHETHER TO APPLY           │
│     FIRST OFFSET METHOD TO CURRENT SLICE,           │
│   SECOND OFFSET USE INFORMATION INDICATING          │
│  WHETHER TO APPLY SECOND OFFSET METHOD TO           │──17
│   CURRENT SLICE, AND FIRST OFFSET PARAMETER         │
│    AND SECOND OFFSET PARAMETER COMPRISING           │
│       OFFSET VALUES OF CURRENT BLOCK                │
└────────────────────────┬────────────────────────────┘
                         ▼
                   ┌─────────┐
                   │   END   │
                   └─────────┘
```

# FIG. 2A

20

22

24

FIRST OFFSET
METHOD ENCODER

SECOND OFFSET
METHOD ENCODER

# FIG. 2B

START

| WHEN FIRST OFFSET METHOD IS APPLIED TO CURRENT SLICE COMPRISING CURRENT BLOCK, ADJUST OFFSET WITH RESPECT TO CURRENT BLOCK BASED ON FIRST OFFSET PARAMETER OF CURRENT BLOCK | —21 |

| WHEN FIRST OFFSET METHOD IS ADJUSTED TO CURRENT SLICE, DETERMINE WHETHER TO APPLY SECOND OFFSET METHOD TO CURRENT SLICE | —23 |

| WHEN SECOND OFFSET METHOD IS APPLIED TO CURRENT SLICE, DETERMINE SECOND OFFSET PARAMETER OF CURRENT BLOCK | —25 |

| ADJUST OFFSET BASED ON SECOND OFFSET PARAMETER WITH RESPECT TO CURRENT BLOCK WITH RESPECT TO WHICH OFFSET BASED ON FIRST OFFSET PARAMETER IS ADJUSTED | —27 |

END

# FIG. 3

EP 3 203 738 A1

# FIG. 4A

| 41<br>EO CLASS = 0<br>HORIZONTAL | 42<br>EO CLASS = 1<br>VERTICAL | 43<br>EO CLASS = 2<br>135° DIAGONAL | 44<br>EO CLASS = 3<br>45° DIAGONAL |
|---|---|---|---|
| X1 X0 X2 | X3<br>X0<br>X4 | X5<br>X0<br>X8 | X6<br>X0<br>X7 |

# FIG. 4B

| CATEGORY | CONDITION |
|---|---|
| 1 | Xc < Xa && Xc < Xb |
| 2 | (Xc < Xa && Xc == Xb)‖(Xc == Xa && Xc < Xb) |
| 3 | ( Xc > Xa && Xc == Xb)‖(Xc == Xa && Xc > Xb) |
| 4 | Xc > Xa && Xc > Xb |
| 0 | IF CONDITIONS FOR CATEGORIES 1, 2, 3, AND 4 ARE NOT SATISFIED |

# FIG. 4C

CATEGORY 1

51

SAMPLE VALUE / SAMPLE INDEX

CATEGORY 2

52

SAMPLE VALUE / SAMPLE INDEX

53

SAMPLE VALUE / SAMPLE INDEX

CATEGORY 3

54

SAMPLE VALUE / SAMPLE INDEX

CATEGORY 4

56

SAMPLE VALUE / SAMPLE INDEX

55

SAMPLE VALUE / SAMPLE INDEX

# FIG. 5

y-axis:
number of sample in bands

54

53

first band position (p1)

signal four offsets from the
(01,02,03,04) ~51

x-axis:
sample intensity

minimum
sample value (0)

0~7 8~15 16~23

88~95 96~103 104~111 112~119

248~255 maximum
sample value (255)

# FIG. 6A

60

| 128 | 100 | 128 |
|-----|-----|-----|
| 110 (X1) | **90** (X0) | 98 (X2) |
| 110 | 100 | 100 |

61

$1^{st}$ SAO →

62

| 128 | 107 | 128 |
|-----|-----|-----|
| 110 | **97** | 98 |
| 110 | 102 | 100 |

63

# FIG. 6B

62

| 128 | 107 (X3) | 128 |
|-----|-----|-----|
| 110 | **97** (X0) | 98 |
| 110 | 102 (X4) | 100 |

63

$2^{nd}$ SAO →

64

| 128 | 107 | 128 |
|-----|-----|-----|
| 111 | **102** | 103 |
| 110 | 102 | 100 |

# FIG. 7

<u>70</u>

| Case | 1st_slice_sao_flag | 2nd_slice_sao_flag | Current slice | |
|---|---|---|---|---|
| | | | 1st sao | 2nd sao |
| 1 | 0 | – | not applied | |
| 2 | 1 | 0 | applied | not applied |
| 3 | | 1 | applied | applied |

<u>71</u>

| Case | 1st_slice_sao_flag | 2nd_slice_sao_flag | Current slice | |
|---|---|---|---|---|
| | | | 1st sao | 2nd sao |
| 4 | 0 | – | not applied | |
| 5 | 1 | – | applied | applied |

# FIG. 8A

80

| Case | 1st_Cb_sao_flag | 2nd_Cb_sao_flag | Current slice | |
|---|---|---|---|---|
| | | | 1st sao | 2nd sao |
| 1 | 0 | – | not applied | |
| 2 | 1 | 0 | applied | not applied |
| 3 | | 1 | applied | applied |

# FIG. 8b

82

| 1st_sao_type_idx or 2nd_sao_type_idx | SAO type |
|---|---|
| 0 | BO |
| 1 | EO |

84

| Case | 1st_sao_type_idx | 2nd_sao_type_idx | SAO type | |
|---|---|---|---|---|
| | | | 1st sao | 2nd sao |
| 1 | 0 | – | BO | EO |
| 2 | 1 | – | EO | BO |

# FIG. 9

90

| Case | 1st_sao_type_idx | 2nd_slice_sao_flag | Current block | |
|---|---|---|---|---|
| | | | 1st sao | 2nd sao |
| 1 | 0 | – | not applied | |
| 2 | 10 | 0 | BO | not applied |
| | | 10 | BO | BO |
| | | 11 | BO | EO |
| 3 | 11 | 0 | EO | not applied |
| | | 10 | EO | BO |
| | | 11 | EO | EO |

# FIG. 10A

1000

| 1st_sao_type_idx or 2nd_sao_type_idx | SAO edge offset class |
|---|---|
| 0 | 0-degree EO |
| 1 | 90-degree EO |
| 2 | 135-degree EO |
| 3 | 45-degree EO |

# FIG. 10B

1001

| Case | 1st_sao_class | 2nd_sao_class | SAO type and class | |
|---|---|---|---|---|
| | | | 1st sao | 2nd sao |
| 1 | 0 | 0 | BO | 0- degree EO |
| | | 1 | BO | 90-degree EO |
| | | 2 | BO | 135-degree EO |
| | | 3 | BO | 45-degree EO |
| 2 | 1 | 0 | 0-degree EO | BO |
| | | 1 | 0-degree EO | 90-degree EO |
| | | 2 | 0-degree EO | 135-degree EO |
| | | 3 | 0-degree EO | 45-degree EO |
| 3 | 2 | 0 | 90-degree EO | BO |
| | | 1 | 90-degree EO | 0- degree EO |
| | | 2 | 90-degree EO | 135-degree EO |
| | | 3 | 90-degree EO | 45-degree EO |
| 4 | 3 | 0 | 135-degree EO | BO |
| | | 1 | 135-degree EO | 0- degree EO |
| | | 2 | 135-degree EO | 90-degree EO |
| | | 3 | 135-degree EO | 45-degree EO |
| 5 | 4 | 0 | 45-degree EO | BO |
| | | 1 | 45-degree EO | 0- degree EO |
| | | 2 | 45-degree EO | 90-degree EO |
| | | 3 | 45-degree EO | 135-degree EO |

# FIG. 11

1100

| 1st_sao_type_idx or 2nd_sao_type_idx | Merge mode |
|---|---|
| 0 | not applied |
| 1 | applied |

## FIG. 12

100

110

120

130

LCU
SPLITTER

CODING UNIT
DETERMINER

OUTPUTTER

## FIG. 13

200

210

220

230

RECEIVER

IMAGE DATA
AND ENCODING
INFORMATION
EXTRACTOR

IMAGE DATA
DECODER

# FIG. 14

64

64 | 64×64

64

32 | 64×32

32

64 | 32×64

32

32 | 32×32

32

32 | 32×32

32

16 | 32×16

16

32 | 16×32

16

16 | 16×16

16

16 | 16×16

16

8 | 16×8

8

16 | 8×16

8

8 | 8×8

8

8 | 8×8

8

4 | 8×4

4

8 | 4×8

4

4 | 4×4

315

335 325

RESOLUTION:1920×1080
MAXIMUM SIZE OF CODING UNIT:64
MAXIMUM DEPTH=2

— 310

RESOLUTION:1920×1080
MAXIMUM SIZE OF CODING UNIT:64
MAXIMUM DEPTH=3

— 320

RESOLUTION:352×288
MAXIMUM SIZE OF CODING UNIT:16
MAXIMUM DEPTH=1

— 330

# FIG. 15

# FIG. 16

500

505
BITSTREAM → | PARSER 510 | → | ENTROPY DECODER 520 | → | DEQUANTIZER 530 | → | INVERSE TRANSFORMER 540 |

595
RECONSTRUCTED FRAME ← | OFFSET ADJUSTER 580 | ← | DEBLOCKING FILTER 570 | ← | INTRA PREDICTOR 550 | ← INTRA

REFERENCE FRAME
585

| MOTION COMPENSATOR 560 | ← INTER

EP 3 203 738 A1

# FIG. 17

600

MAXIMUM HEIGHT AND
LCU  MAXIMUM WIDTH OF
CODING UNIT=64    MAXIMUM DEPTH =3

PREDICTION UNIT/ PARTITION

64 — 610
64
64
64×64

64 — 612
64
32
64×32

32 — 614
64
32×64

32 — 616
32
32×32

32 — 620
32
32
32×32

32 — 622
32
16
32×16

16 — 624
32
16×32

16 — 626
16
16×16

16 — 630
16
16
16×16

16 — 632
16
8
16×8

8 — 634
16
8×16

8 — 636
8
8×8

MINIMUM CODING UNIT

8 — 640
8
8
8×8

8 — 642
8
4
8×4

4 — 644
8
4×8

4 — 646
4
4×4

DEEPER CODING UNIT

# FIG. 18

CODING UNIT (710)

64

64×64

TRANSFORMATION UNIT (720)

32

32

32×32

# FIG. 19

PARTITION TYPE (800)

2N / 802
2N

2N / 804
N 0
1

N / 806
2N 0 1

N / 808
N 0 1
2 3

PREDICTION MODE (810)

/ 812
INTRA MODE

/ 814
INTER MODE

/ 816
SKIP MODE

SIZE OF TRANSFORMATION UNIT (820)

/ 822  / 824
INTRA

/ 826  / 828
INTER

# FIG. 20

EP 3 203 738 A1

FIG. 21

CODING UNIT (1010)

FIG. 22

PREDICTION UNIT (1060)

# FIG. 23

1014

1016

1022

1032

1048

1054

1050

1052

TRANSFORMATION UNIT (1070)

# FIG. 24

EP 3 203 738 A1

## FIG. 25

## FIG. 26

# FIG. 27

STREAMING
SERVER (11300)

CAMERA
(12600)

COMPUTER (12100)

(11700)

COMMUNICATION
NETWORK
(11400)

(11800)

PDA (12200)

NTERNET
(11100)

(11900)

VIDEO CAMERA (12300)

INTERNET SERVICE
PROVIDER (11200)

11000

(12000)

MOBILE PHONE
(12500)

EP 3 203 738 A1

## FIG. 28

FIG. 29

# FIG. 30

BROADCASTING
SATELLITE (12900)

12820

MONITOR
(12840)

REPRODUCING
APPARATUS
(12830)

BROADCASTING
STATION (12890)

ANTENNA (12910)

AUTOMOBILE
(12920)

ANTENNA
(12860)

AUTOMOBILE NAVIGATION
SYSTEM (12930)

CABLE ANTENNA (12850)

12960

SET-TOP
BOX (12870)

MONITOR
(12880)

12970    SD

RECORDER
(12950)

TV (12810)

EP 3 203 738 A1

# FIG. 31

14300

14800

14400

14000
CLOUD
COMPUTING
SERVER

14200
COMPUTING
RESOURCE

DATA
COMMUNICATION
NETWORK

CLOUD
NETWORK

14500

14100
USER DB

14600

14700

69

## INTERNATIONAL SEARCH REPORT

| | International application No. |
|---|---|
| | **PCT/KR2015/010062** |

### A. CLASSIFICATION OF SUBJECT MATTER

*H04N 19/117(2014.01)i, H04N 19/176(2014.01)i, H04N 19/174(2014.01)i*

According to International Patent Classification (IPC) or to both national classification and IPC

### B. FIELDS SEARCHED

Minimum documentation searched (classification system followed by classification symbols)
H04N 19/117; H04N 7/26; H04N 19/132; H04N 19/13; H04N 19/86; H04N 19/82; H04N 19/00; H04N 19/176; H04N 19/174

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: multi, offset, parameter, decryption

### C. DOCUMENTS CONSIDERED TO BE RELEVANT

| Category* | Citation of document, with indication, where appropriate, of the relevant passages | Relevant to claim No. |
|---|---|---|
| X | US 2014-0177704 A1 (QUALCOM INCORPORATED) 26 June 2014<br>See paragraphs [0019], [0051], [0102], [0104]-[0105], [0108]-[0109], [0113]-[0114] and figures 6, 8. | 1-21 |
| A | KR 10-2014-0126246 A (SAMSUNG ELECTRONICS CO., LTD.) 30 October 2014<br>See paragraphs [0071]-[0080], claims 1-9 and figure 1b. | 1-21 |
| A | KR 10-2014-0066677 A (ELECTRONICS AND TELECOMMUNICATIONS RESEARCH INSTITUTE) 02 June 2014<br>See paragraphs [0079]-[0091], claim 1 and figure 6. | 1-21 |
| A | KR 10-2013-0098481 A (KOREA ELECTRONICS TECHNOLOGY INSTITUTE)<br>05 September 2013<br>See abstract, paragraphs [0057]-[0072] and figure 7. | 1-21 |
| A | WO 2013-177975 A1 (MEDIATEK INC.) 05 December 2013<br>See abstract, claims 1-5 and figure 6. | 1-21 |

| ☐ | Further documents are listed in the continuation of Box C. | ☒ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 DECEMBER 2015 (15.12.2015) | **06 JANUARY 2016 (06.01.2016)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2015/010062**

| Patent document cited in search report | Publication date | Patent family member | Publication date |
|---|---|---|---|
| US 2014-0177704 A1 | 26/06/2014 | WO 2014-100603 A1 | 26/06/2014 |
| KR 10-2014-0126246 A | 30/10/2014 | TW 201507439 A | 16/02/2015 |
| | | US 2014-0314141 A1 | 23/10/2014 |
| | | WO 2014-171807 A1 | 23/10/2014 |
| KR 10-2014-0066677 A | 02/06/2014 | CN 103959794 A | 30/07/2014 |
| | | CN 104202610 A | 10/12/2014 |
| | | EP 2763411 A1 | 06/08/2014 |
| | | EP 2887674 A2 | 24/06/2015 |
| | | EP 2887674 A3 | 07/10/2015 |
| | | JP 2014-171227 A | 18/09/2014 |
| | | JP 2014-531851 A | 27/11/2014 |
| | | JP 2015-181270 A | 15/10/2015 |
| | | KR 10-1356450 B1 | 05/02/2014 |
| | | KR 10-1366650 B1 | 26/02/2014 |
| | | KR 10-2013-0034566 A | 05/04/2013 |
| | | KR 10-2013-0034570 A | 05/04/2013 |
| | | KR 10-2013-0095241 A | 27/08/2013 |
| | | KR 10-2013-0095242 A | 27/08/2013 |
| | | KR 10-2014-0060478 A | 20/05/2014 |
| | | US 2014-0219337 A1 | 07/08/2014 |
| | | US 2014-0286396 A1 | 25/09/2014 |
| | | US 9148663 B2 | 29/09/2015 |
| | | WO 2013-048151 A1 | 04/04/2013 |
| KR 10-2013-0098481 A | 05/09/2013 | NONE | |
| WO 2013-177975 A1 | 05/12/2013 | CA 2863549 A1 | 05/12/2013 |
| | | CN 104303506 A | 21/01/2015 |
| | | EP 2856758 A1 | 08/04/2015 |
| | | JP 2015-521443 A | 27/07/2015 |
| | | KR 10-2014-0130171 A | 07/11/2014 |
| | | US 2015-0098513 A1 | 09/04/2015 |

Form PCT/ISA/210 (patent family annex) (January 2015)